Europäisches Patentamt

European Patent Office

Office européen des brevets

(11) Veröffentlichungsnummer : **0 099 365**
**B1**

(12) **EUROPÄISCHE PATENTSCHRIFT**

(45) Veröffentlichungstag der Patentschrift :
19.08.87

(51) Int. Cl.⁴ : **H 01 J 49/20**

(21) Anmeldenummer : 83900180.7

(22) Anmeldetag : 29.12.82

(86) Internationale Anmeldenummer :
PCT/CH 82/00140

(87) Internationale Veröffentlichungsnummer :
WO/8302676 (04.08.83 Gazette 83/18)

(54) VERFAHREN ZUR EICHUNG EINES MASSENSPEKTROMETERS.

(30) Priorität : 25.01.82 CH 431/82

(43) Veröffentlichungstag der Anmeldung :
01.02.84 Patentblatt 84/05

(45) Bekanntmachung des Hinweises auf die Patenterteilung : 19.08.87 Patentblatt 87/34

(84) Benannte Vertragsstaaten :
DE GB

(56) Entgegenhaltungen :
US-A- 4 300 203
Nuclear Instruments and Methods, Band 89, 1.
Dezember 1970, D. Goss: "A nonparametric method
for the extraction of information from digitized spectra" Seiten 221-224

(73) Patentinhaber : MSP FRIEDLI & CO.
Bindenhausstrasse 46
CH-3098 Köniz (CH)

(72) Erfinder : BECK, Erwin
rue Haldimand 16
CH-1003 Lausanne (CH)
Erfinder : FRIEDLI, Felix
Bindenhausstrasse 46
CH-3098 Köniz (CH)

**Beschreibung**

Die Erfindung bezieht sich auf die Eichung eines Massenspektrometers, bei welchem die Massentrennung durch Ablenkung in einem Magnetfeld erfolgt und dessen Massendurchlauf mittels kontinuierlicher Magnetfeld-Aenderung erreicht wird, und bei welchem die Massenzahl der im Ionendetektor auftreffenden Ionen fortlaufend aus dem im Trennmagneten herrschenden Magnetfeld bestimmt wird, um eine dem Massendurchlauf folgende Massenskala zu erzeugen.

Die prinzipielle Funktionsweise eines Massenspektrometers, bei dem die Massentrennung mittels Ablenkung in einem Magnetfeld erfolgt, kann wie folgt beschrieben werden. In einer Ionenquelle wird eine zu analysierende Substanz ionisiert. Die erzeugten Ionen werden mittels einer Beschleunigungs-Spannung beschleunigt und treten durch einen Eintritts-Spalt in einen Trennmagneten, dessen Magnetfeld variabel ist. Dort werden die Ionen je nach ihrer Massenzahl und der Stärke des auf sie einwirkenden Magnetfeldes mehr oder weniger stark abgelenkt. Durch die Einstellung des Magnetfeldes auf einen bestimmten Wert wird erreicht, dass Ionen einer bestimmten Massenzahl in eine vorgegebene Flugbahn, die das Magnetfeld durch einen Autritts-Spalt verlässt, gelenkt und in einem Ionendetektor aufgefangen werden.

Ein Massenspektrometer dient dazu, das Massenspektrum der zu analysierenden Substanz zu ermitteln. Um das Massenspektrum von kleiner zu grosser Massenzahl zu durchlaufen, wird das im Trennmagneten herrschende Magnetfeld kontinuierlich von kleinen bis zu grossen Werten variiert, sodass Ionen von kleiner bis zu grosser Massenzahl nacheinander im Ionendetektor auftreffen. Das Massenspektrum wird ermittelt, indem die vom Ionendetektor gemessene Ionen-Intensität fortlaufend auf einem Registriergerät, z. B. einem Galvanometer-Schreiber, aufgezeichnet wird.

In einem derartigen Massenspektrometer ist es von Vorteil, die Massenzahl der momentan im Ionendetektor auftreffenden Ionen fortlaufend zu bestimmen, um eine dem Massendurchlauf folgende Massenskala, entweder in digitaler Form oder als analoge Spannung, zu erzeugen.

Eine in digitaler Form vorliegende und dem Massendurchlauf folgende Massenskala erlaubt es, eine digitale Massenanzeige zu betreiben, um die Massenzahl der momentan im Ionendetektor auftreffenden Ionen anzuzeigen. Eine derartige digitale Massenanzeige besteht aus einem Binär/BCD-Wandler und einer digitalen dezimalen Anzeige-Einheit. Ist beispielsweise die digitale Massenskala auf 14 Bit genau gegeben, kann der Binär/BCD-Wandler derart codiert werden, dass Massenzahlen zwischen 0.0 und 1638.3 Massen auf 0.1 Massen genau angezeigt werden können.

Liegt eine dem Massendurchlauf folgende Massenskala in digitaler Form vor, kann damit ebenfalls ein digitaler Massenmarkierer betrieben werden, um Markierungs-Impulse, sogenannte Massenmarken, beispielsweise für Einer-, Fünfer-, Zehner- und Hunderterwerte der Massenzahl zu erzeugen, und gleichzeitig mit der Ionen-Intensität auf dem Registriergerät aufzuzeichnen. Ein derartiger Massenmarkierer setzt sich zusammen aus einem Binär/BCD-Wandler, je einem digitalen Komparator für Einer-, Fünfer-, Zehner- und Hunderterwerte, sowie einer Schaltung zur Erzeugung der Massenmarken.

Die zur Registrierung eines Massenspektrums erforderliche kontinuierliche Magnetfeld-Aenderung von kleinen bis zu grossen Werten wird üblicherweise durch Regelung des Magnetstroms erreicht. Das im Trennmagneten herrschende Magnetfeld ist, bis auf die Hysterese, dem Magnetstrom proportional. Die Massenzahl der im Ionendetektor auftreffenden Ionen ist andererseits dem Quadrat des durchquerten Magnetfeldes proportional. Um beispielsweise einen zeitlich linearen Massendurchlauf zu erhalten, muss demnach dafür gesorgt werden, dass der Magnetstrom quadratisch anwächst, wobei jedoch bei kleinen Massen der Massendurchlauf infolge der Hysterese zeitlich verzerrt ist.

Liegt eine dem Massendurchlauf folgende Massenskala in analoger Form vor, kann die kontinuierliche Magnetfeld-Aenderung mittels der sogenannten Feldregelung erreicht werden. Darin kann ein einer vorgegebenen zeitlichen Funktion folgender Massendurchlauf dadurch erreicht werden, dass einem analogen Feldregler einerseits eine gemäss der zeitlichen Funktion anwachsende Referenz-Spannung, und andererseits die Massenskala zugeführt wird. Der Feldregler variiert dann mittels Rückkopplung den in den Trennmagneten fliessenden Magnetstrom derart, dass der momentane Wert der Massenskala auf den momentanen Wert der Referenz-Spannung geregelt wird.

Es ist bekannt, eine dem Massendurchlauf folgende Massenskala dadurch zu erzeugen, dass das im Trennmagneten herrschende variable Magnetfeld mit einem geeigneten Messwertgeber in eine Mess-Spannung umgesetzt wird. Diese Mess-Spannung liefert eine umso genauere Massenskala, je genauer sie einer exakt linearen Zuordnung zwischen Massenzahl und Mess-Spannung folgt.

Hallsonden, sowie Feldplatten mit magnetisch steuerbarem Widerstand, stellen zur Magnetfeld-Messung geeignete Messwertgeber dar. Um die gewünschte Mess-Spannung zu erzeugen, benötigen diese einen konstanten Steuerstrom. In einer Hallsonde ist es der Hall-Effekt welcher einen solchen verlangt. Ein eine Feldplatte durchfliessender konstanter Steuerstrom wird andererseits dazu benötigt, den magnetisch steuerbaren Widerstand in eine Mess-Spannung zu wandeln.

Hallsonden und Feldplatten liefern jedoch eine nichtlineare Zuordnung $U = f(M)$ zwischen Massenzahl $M$ und Mess-Spannung $U$. Um zur Erzeugung einer dem Massendurchlauf folgenden Massenskala in einem Massenspektrometer der erwähnten Art von Nutzen zu sein, muss die Mess-Spannung einer Hallsonde bzw. Feldplatte fortlaufend in einen der Massenzahl direkt proportionalen

2

Wert U' = c M linearisiert werden. Dies bedeutet mit anderen Worten, dass auf die Mess-Spannung fortlaufend eine Skalen-Transformation U'/c = M = g(U) angewendet werden muss.

Eine Methode der Skalen-Transformation ist in Nuclear Instruments and Methods, Band 89, 1. Dezember 1970, D. Goss : « A non-parametric method for the extraction of information from digitized spectra », Seiten 221-224, insbesondere Seite 223, Spalte 2, Zeile 22, bis Seite 224, Spalte 2, Zeile 17, anhand eines Mehrkanal-Analysators für Gammastrahlen dargestellt. Ein derartiger Analysator dient zur Speicherung eines digitalisierten Gammaspektrums, wobei dieses eine Anzahl Peaks umfasst, welche durch die beiden digitalen Messgrössen Intensität und Kanalposition charakterisiert sind. Es soll aus der Kanalposition eines Peaks die Energie des den Peak verursachenden Gammastrahls ermittelt werden. Da die Zuordnung zwischen Energie E und Kanalposition V nichtlinear ist, ist die Kanalposition in einen der Energie direkt proportionalen Wert zu linearisieren. Gemäss der genannten Publikation erfolgt die dazu benötigte Skalen-Transformation E = g(V) mittels Interpolation zwischen Peaks eines bekannten Spektrums.

Bevor jedoch die Interpolation durchgeführt werden kann, muss der Mehrkanal-Analysator mittels einer Eichsubstanz, d. h. einer Substanz deren Gammaspektrum bekannt ist, geeicht werden, um Stützwerte für die Interpolation festzulegen. Dies erfolgt dadurch, dass eine Anzahl Peaks des bekannten Gammaspektrums ausgewählt und deren Kanalpositionen $V_k$ bekannte Energiewerte $E_k$ zugeordnet werden. In den Stützwerten ($V_k$, $E_k$) ist dann die Skalen-Transformation E = g(V) auf experimentelle Weise exakt festgelegt.

Wenn anschliessend im auf diese Weise geeichten Mehrkanal-Analysator eine unbekannte Substanz analysiert wird, und dabei ein unbekannter Peak zwischen zwei Stützwerte, d. h. in eine zwischen zwei ausgewählten Peaks des bekannten Spektrums liegende Kanalposition fällt, kann dort die Skalen-Transformation mittels Interpolation beliebig genau angenähert werden, beispielsweise mittels der auf Differenzen-Quotienten basierenden Methode von Newton.

Eine Anwendung der Interpolation zwischen Peaks eines bekannten Spektrums auf die Linearisierung der Mess-Spannung einer, zur Messung des im Trennmagneten eines Massenspektrometers herrschenden Magnetfeldes dienenden, Hallsonde ist in Anal. Chem., Band 42, November 1970, C. C. Sweeley et al. : « On-line digital computer system for high-speed single focusing mass spectrometry », Seiten 1505-1516, insbesondere Seite 1507, Spalte 1, Zeile 5, bis Seite 1508, Spalte 2, Zeile 26, ausführlich beschrieben.

Ein Mini-Computer steuert die Erfassung eines Massenspektrums, wobei dieses eine Anzahl Peaks umfasst, welche durch die beiden Messgrössen Ionen-Intensität und Mess-Spannung charakterisiert sind. Dazu verfolgt ein Scan-Algorithmus die im Ionendetektor gemessene und von einem Analog/Digital-Wandler digitalisierte Ionen-Intensität während des Durchlaufens eines Massenspektrums. Sobald er anhand eines Intensitäts-Maximums einen Peak festgestellt hat, erfasst er an dieser Stelle die von der Hallsonde gelieferte und ebenfalls digitalisierte Mess-Spannung. Nach Beendigung des Massendurchlaufs werden für jeden Peak die Messgrössen Intensität und Mess-Spannung auf dem Plattenspeicher des Computers abgelegt.

Dieser Scan-Algorithmus wird insbesondere auch zur Eichung des Massenspektrometers ausgeführt, nachdem eine Eichsubstanz, d. h. eine Substanz, deren Massenspektrum bekannt ist, in die Ionenquelle gebracht wurde. Nach Beendigung des zur Eichung dienenden Massendurchlaufs führt der Computer einen Eich-Algorithmus durch, in welchem er die für das bekannte Massenspektrum ermittelten und auf dem Plattenspeicher abgelegten Messgrössen Intensität und Mess-Spannung auf einem Terminal ausgibt. In einem interaktiven Dialog legt der Benützer Stützwerte für die Interpolation fest, indem er eine beliebige Anzahl von Mess-Spannungen $U_k$ auswählt und diesen die Massenzahlen $M_k$ bekannter Peaks zuordnet. In einer beliebigen Anzahl von Stützwerten ($U_k$, $M_k$) ist dann die Skalen-Transformation M = g(U) exakt festgelegt. Abschliessend speichert der Eich-Algorithmus die Stützwerte, d. h. die Mess-Spannungen und Massenzahlen der ausgewählten Peaks des bekannten Spektrums, in Form einer Interpolations-Tabelle auf Band.

Wenn nun im auf diese Weise geeichten Massenspektrometer eine unbekannte Substanz mittels des beschriebenen Scan-Algorithmus analysiert wird, liegen nach Beendigung des Massendurchlaufs für jeden erkannten Peak des unbekannten Spektrums die Mess-Spannungen auf dem Plattenspeicher vor. Zur Ausführung der Skalen-Transformation werden diese aus dem Plattenspeicher geholt und mittels der auf Band gespeicherten Daten des bekannten Spektrums interpoliert.

Die geschilderte Anwendung der Interpolation zwischen Peaks eines bekannten Spektrums ist jedoch nicht in der Lage, eine dem Massendurchlauf folgende Massenskala zu erzeugen, da die Interpolation nur auf bei erkannten Peaks erfasste Werte der Mess-Spannung angewendet und erst nach Beendigung des Massendurchlaufs durchgeführt wird. Eine dem Massendurchlauf folgende Massenskala kann nur dadurch erzielt werden, dass die Interpolation zwischen Peaks eines bekannten Spektrums fortlaufend auf die von der Hallsonde abgegebene Mess-Spannung ausgeführt wird.

In einer digitalen Realisierung bedeutet dies, dass die Ausführungszeit einer derartigen Interpolation die Ausführungszeit der auf die Mess-Spannung auszuführenden Analog/Digital-Wandlung, welche typischerweise 40 Mikrosekunden beträgt, nicht überschreiten sollte. Eine solche Rechengeschwindigkeit ist jedoch in Software auf einem konventionellen Computer nicht zu erreichen. Um die Interpolation zwischen Peaks eines bekannten Spektrums fortlaufend ausführen zu können, muss sie demnach in Hardware realisiert werden.

Eine auf analogen Funktions-Generatoren basierende Anwendung der Interpolation zwischen Peaks eines bekannten Spektrums auf die Linearisierung der Mess-Spannung einer, zur Messung des im Trennmagneten eines Massenspektrometers herrschenden Magnetfeldes dienenden, Hallsonde ist in J. Phys. E, Band 12, 1979, G. W. Trott et al. : « Improved accuracy and linearity of Hall probes and their application to linked scans », Seiten 979-983, insbesondere Seite 981, Spalte 1, Zeile 42, bis Seite 982, Spalte 1, Zeile 19, beschrieben. Die Mess-Spannung U wird dabei mittels einer vom Funktions-Generator erzeugten Fehler-Funktion e(U) fortlaufend in einen dem Magnetfeld B direkt proportionalen Wert $U' = c\ B$ korrigiert : $U' = U — e(U)$.

Zur Eichung des Massenspektrometers wird wiederum eine Eichsubstanz in die Ionenquelle gebracht. Statt auf das bekannte Spektrum einen Scan-Algorithmus anzuwenden und anschliessend darin ermittelte Mess-Spannungen auszuwählen, stellt der Benützer das im Trennmagneten herrschende Magnetfeld nacheinander auf solche Werte ein, dass Ionen bekannter Peaks im Ionendetektor auftreffen, und misst die dabei von der Hallsonde abgegebenen Mess-Spannungen. Damit ist an diesen Stellen die Abweichung von der gewünschten Linearität bekannt, sodass den gemessenen Mess-Spannungen Werte der Fehler-Funktion zugeordnet werden können, um an diesen Stellen die Fehler-Funktion exakt festzulegen.

Im Funktions-Generator ist für jeden zur Eichung benützten Peak ein Potentiometer vorgesehen, welches während der Eichung derart eingestellt werden muss, dass der Funktions-Generator aus einer Mess-Spannung $U_k$ den zugeordneten Wert der Fehler-Funktion $e(U_k)$ erzeugt. Sind im Funktions-Generator auf diese Weise den Mess-Spannungen Werte der Fehler-Funktion zugeordnet worden, ist er in der Lage, während eines Massendurchlaufs fortlaufend die Fehler-Funktion mittels Interpolation zwischen Peaks eines bekannten Spektrums zu erzeugen.

Es ist bekannt, analoge Funtions-Generatoren in Massenspektrometern ebenfalls dazu einzusetzen, mittels Interpolation zwischen Peaks eines bekannten Spektrums eine dem Massendurchlauf folgende Massenskala in analoger Form zu erzeugen. Um Stützwerte für die Interpolation festzulegen, stellt der Benützer das im Trennmagneten herrschende Magnetfeld nacheinander auf eine festgelegte, der Anzahl der im Funktions-Generator vorgesehenen Potentiometer entsprechenden, Anzahl von solchen Werten ein, dass Ionen bekannter Peaks mit Massenzahlen $M_k$ im Ionendetektor auftreffen, und ordnet den dabei von der Hallsonde bzw. Feldplatte abgegebenen Mess-Spannungen $U_k$ durch Einstellen der Potentiometer die Massenzahlen $M_k$ zu. In einer festgelegten Anzahl von Stützwerten $(U_k, M_k)$ ist dann die Skalen-Transformation $M = g(U)$ auf experimentelle Weise exakt festgelegt.

Neben den bekannten Nachteilen analoger Schaltungs-Technik wie Empfindlichkeit auf Temperatur- und Spannungs-Schwankungen weist die Erzeugung einer dem Massendurchlauf folgenden Massenskala mittels analoger Funktions-Generatoren den weiteren Nachteil auf, dass die Festlegung von Stützwerten auf manuelle Weise durch Einstellen einer Anzahl von Potentiometern erfolgt. Dieser Nachteil fällt besonders dann ins Gewicht, wenn öfters eine Eichung durchgeführt werden muss. Die Erfahrung zeigt nun, dass es nicht genügt, ein Massenspektrometer ein für allemal z. B. bei dessen Installation zu eichen. Da die Zuordnung zwischen Massenzahl und Mess-Spannung von der Position der Hallsonde bzw. Feldplatte im Trennmagneten, sowie vom Wert der Beschleunigungs-Spannung der Ionenquelle abhängt, ist man dazu gezwungen, periodisch eine Eichung vorzunehmen.

Die Erfindung, wie sie im Anspruch gekennzeichnet ist, löst die Aufgabe, ein Verfahren zu finden, in welchem die Eichung eines Massenspektrometers mittels einer Eichsubstanz dadurch vereinfacht wird, dass die Festlegung von Stützwerten für die Interpolation weitgehend automatisch erfolgt.

Das Verfahren ist unter anderem dadurch gekennzeichnet, dass eine festgelegte Anzahl von Stützwerten, welche die Koordinaten $U_k$ und $M_k$ umfassen, vorgesehen sind, wobei deren Koordinaten $M_k$ auf Massenzahlen bekannter Peaks des von der Eichsubstanz gelieferten Massenspektrums festgelegt sind, und um deren Koordinaten $U_k$ je eine Umgebung festgelegt ist. Ueber die vereinfachte Festlegung von Stützwerten hinaus weist das beschriebene Verfahren den zusätzlichen Vorteil auf, dass es eine irrtümliche Eichung eines Stützwertes auf einen falschen Peak verunmöglicht. Bei einer derartigen falschen Einstellung des im Trennmagneten herrschenden Magnetfeldes fällt die vom Messwertgeber gelieferte Mess-Spannung in keine Umgebung eines Stützwertes, und demzufolge findet der im Verfahren vorgesehene Eich-Algorithmus auch keinen zu eichenden Stützwert.

Ein weiterer Vorteil ergibt sich aus der Tatsache, dass die Stützwerte gemäss des Verfahrens im ungeeichten Zustand einen ungefähren Verlauf der auszuführenden Skalen-Transformation wiedergeben. Die bedeutet mit anderen Worten, dass im ungeeichten Zustand schon eine ungefähre Massenskala zur Verfügung steht, womit eine Massenanzeige betrieben kann. Dies erleichtert die Orientierung im von der Eichsubstanz gelieferten bekannten Massenspektrum, was die korrekte Einstellung des im Trennmagneten herrschenden Magnetfeldes auf bekannte Peaks vereinfacht.

Die Erfindung wird im folgenden anhand von Figuren näher erläutert. In diesen zeigen :

Figur 1    die erfindungsgemässe Erzeugung einer dem Massendurchlauf folgenden Massenskala aus dem im Trennmagneten herrschenden Magnetfeld,

Figur 2    die Darstellung der erfindungsgemässen Eichung eines Stützwertes,

Figur 3    eine Ausführungsform einer zur Erzeugung einer dem Massendurchlauf folgenden Massenskala dienenden Vorrichtung,

Figur 4a eine Ausführungsform eines Steuerwerks für die Vorrichtung nach Fig. 3,

Figur 4b das dem Steuerwerk zugeordnete Feld in einer Mikro-Instruktion,

Figur 5 eine Ausführungsform eines Daten-Speichers für die Vorrichtung nach Fig. 3,

Figur 6 das Schema nach welchem die Funktions-Tabelle im Schreib/Lese-Speicher gespeichert ist,

Figur 7 das Schema nach welchem die Koordinaten der ungeeichten Stützwerte im Lese-Speicher gespeichert sind,

Figur 8 die dem Daten-Speicher, der Eingabe-Logik und der Ausgabe-Logik zugeordneten Felder in einer Mikro-Instruktion,

Figur 9a eine Ausführungsform eines Rechenwerks und Zwischen-Speichers für die Vorrichtung nach Fig. 3,

Figur 9b das dem Rechenwerk und Zwischen-Speicher zugeordnete Feld in einer Mikro-Instruktion,

Figur 10 eine Ausführungsform einer Netzausfall-Logik für die Vorrichtung nach Fig. 3,

Figur 11 eine Ausführungsform einer Eingabe-Logik für die Vorrichtung nach Fig. 3,

Figur 12 eine Ausführungsform einer Ausgabe-Logik für die Vorrichtung nach Fig. 3,

Figur 13 die beiden Formate einer Mikro-Instruktion,

Figur 14 die Struktur des im Steuerwerk nach Fig. 4a gespeicherten Mikro-Programms,

Figur 15 das Flussdiagramm der im Mikroprogramm nach Fig. 14 enthaltenen Segment-Routine.

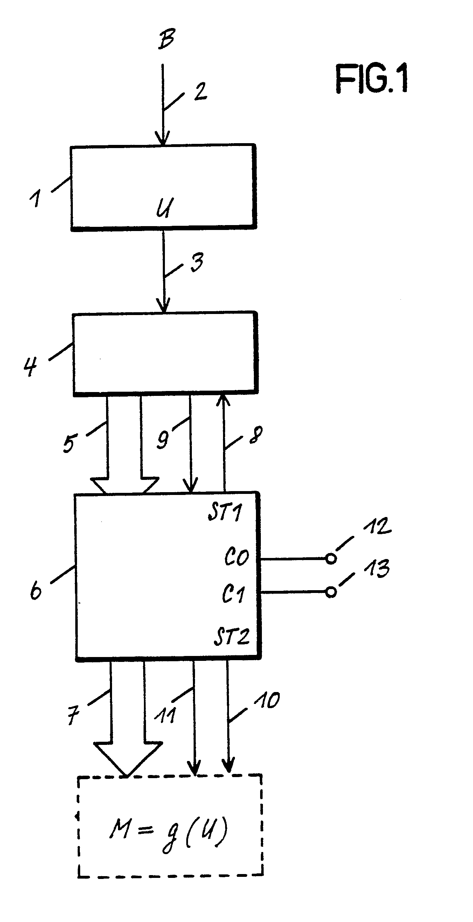

In Fig. 1 ist die fortlaufende Bestimmung der Massenzahl der im Ionendetektor eines Massenspektrometers, bei welchem die Massentrennung durch Ablenkung in einem Magnetfeld erfolgt und dessen Massendurchlauf mittels kontinuierlicher Magnetfeld-Aenderung erreicht wird, auftreffenden Ionen aus dem im Trennmagneten herrschenden Magnetfeld dargestellt. Sie bezweckt die Erzeugung einer dem Massendurchlauf folgenden Massenskala. Ein zur Magnetfeld-Messung geeigneter Messwertgeber 1 setzt das im Trennmagneten herrschende und mit B bezeichnete Magnetfeld 2 in eine mit U bezeichnete Mess-Spannung 3 um. Diese wird in einem Analog/Digital-Wandler 4 in einen digitalen Wert gewandelt, welcher auf Datenleitungen 5 ausgegeben wird.

Eine an den Datenleitungen 5 angeschlossene Vorrichtung 6 führt zwecks Linearisierung der Mess-Spannung U in einen der Massenzahl M direkt proportionalen Wert fortlaufend eine Skalen-Transformation $M = g(U)$ mittels digitaler Interpolation zwischen Peaks eines bekannten Spektrums durch. Die dadurch erzeugte, dem Massendurchlauf folgende, Massenskala wird in digitaler Form auf die Datenleitungen 7 ausgegeben.

Die Vorrichtung 6 startet den Analog/Digital-Wandler 4 mittels eines mit ST1 bezeichneten Strobe-Signals 8. Dieser zeigt den Abschluss einer Wandlung mittels eines Bereitschafts-Signals 9 an. Die Vorrichtung 6 zeigt den Abschluss einer Interpolation mittels eines mit ST2 bezeichneten Strobe-Signals 10 an.

Zwei mit C0 und C1 bezeichnete Befehls-Signale 12 und 13 legen die Betriebsart der Vorrichtung 6 fest. Befindet sich das Befehls-Signal 13 im logischen Zustand Eins, ignoriert die Vorrichtung das Befehls-Signal 12 und führt die digitale Interpolation zwischen Peaks eines bekannten Spektrums durch. Der logische Zustand Null des Befehls-Signals 13 gibt andererseits das Befehls-Signal 12 frei, logischen Zustand Eins die Vorrichtung veranlasst, weiterhin die Interpolation durchzuführen, und welches im logischen Zustand Null die Vorrichtung veranlasst, einen im folgenden näher beschriebenen digitalen Eich-Algorithmus durchzuführen.

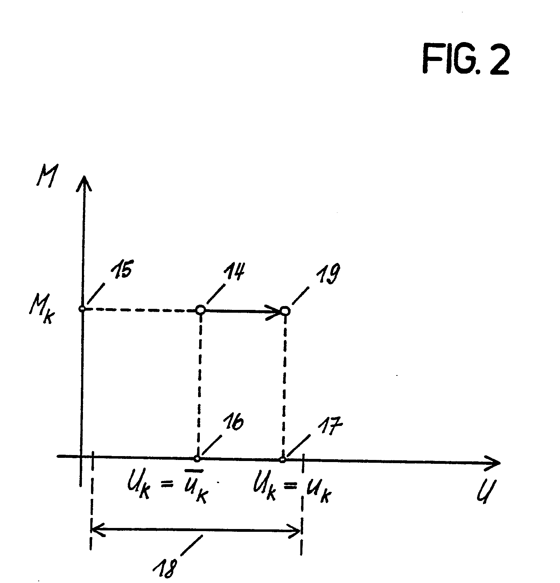

Das Massenspektrometer wird mittels einer Eichsubstanz, d. h. einer Substanz deren Massenspektrum bekannt ist, geeicht, um Stützwerte für die Interpolation festzulegen. In der Vorrichtung 6 sind eine festgelegte Anzahl von Stützwerten in digitaler Form gespeichert, welche im ungeeichten Zustand bloss einen ungefähren Verlauf der auszuführenden Skalen-Transformation wiedergeben. Ein solcher, die Koordinaten $U_k$ und $M_k$ umfassender, Stützwert 14 ist in Fig. 2 dargestellt. Dabei ist seine Koordinate $M_k$ auf den Wert 15 der Massenzahl eines Peaks des durch die Eichsubstanz gelieferten bekannten Massenspektrums festgelegt. Seine Koordinate $U_k$ andererseits weist im ungeeichten Zustand einen mit $\bar{u}_k$ bezeichneten Wert 16 auf. Dieser stimmt näherungsweise mit dem mit $\bar{u}_k$ bezeichneten Wert 17 der Mess-Spannung 3 überein, welchen der Messwertgeber 1 bei Einstellung des im Trennmagneten herrschenden Magnetfeldes 2 auf Ionen des die Massenzahl $M_k$ aufweisenden Peaks des durch die Eichsubstanz gelieferten bekannten Massenspektrums effektiv liefern würde. Schliesslich ist um die Koordinate $U_k$ eines jeden Stützwertes eine Umgebung 18 festgelegt.

Um den in Fig. 2 dargestellten Stützwert 14 auf den effektiven Verlauf der auszuführenden Skalen-Transformation $M = g(U)$ zu eichen, stellt der Benützer das im Trennmagneten herrschende Magnetfeld 2 auf einen solchen Wert ein, dass Ionen des die Massenzahl $M_k$ aufweisenden Peaks des durch die Eichsubstanz gelieferten bekannten Massenspektrums im Ionendetektor auftreffen. Dies hat zur Folge, dass der Messwertgeber 1 die effektive Mess-Spannung $u_k$ liefert, welche als digitaler Wert auf den Datenleitungen 5 der Vorrichtung zugeführt wird. Anschliessend veranlasst der Benützer in der Vorrichtung die Ausführung des erwähnten digitalen Eich-Algorithmus, indem er die beiden Befehls-Signale 12 und 13 in den logischen Zustand Null setzt.

In diesem digitalen Eich-Algorithmus wählt die Vorrichtung selbständig denjenigen Stützwert 14 zur Eichung aus, in dessen Umgebung 18 der der Vorrichtung auf den Datenleitungen 5 zugeführte effektive

Wert $u_k$ der Mess-Spannung 3 fällt, und ersetzt im auf diese Weise ausgewählten Stützwert 14 selbständig dessen Wert 16 der Koordinate $U_k$ durch den der Vorrichtung zugeführten effektiven Wert 17, belässt jedoch dessen Koordinate $M_k$ auf der Massenzahl 15. Der Uebergang des ungeeichten Stützwertes 14 in den geeichten Stützwert 19 ist in Fig. 2 dargestellt. Damit ist im Stützwert 19 die Skalen-Tranformation $M = g(U)$ auf experimentelle Weise festgelegt.

Sind auf diese Weise alle in der Vorrichtung gespeicherten Stützwerte auf den effektiven Verlauf der Skalen-Transformation geeicht worden, ist die Vorrichtung bereit, eine dem Massendurchlauf folgende Massenskala mittels digitaler Interpolation zwischen Peaks eines bekannten Spektrums zu erzeugen. Zuerst ermittelt sie den Segment-Index j, um festzustellen, in welchem Segment, d. h. zwischen welchen beiden benachbarten Stützwerten bzw. deren Koordinaten $U_j$ und $U_{j+1}$ der der Vorrichtung 6 auf den Datenleitungen 7 zugeführte Wert der Mess-Spannung U liegt. Anschliessend führt die Vorrichtung im ermittelten Segment die Interpolation durch. Sollte irrtümlicherweise einer oder mehrere der zur Interpolation verwendeten Stützwerte noch ungeeicht sein, wird dies durch ein Eich-Signal 11 angezeigt.

Im folgenden wird angenommen, dass zur Interpolation die auf Differenzen-Quotienten beruhende Methode von Newton benützt wird :

$$M = g(U) = M_{j-1} + (U - U_{j-1}) \cdot [\Delta_j + (U - U_j) \nabla_j] \tag{1}$$

Die Differenzen-Quotienten erster Ordnung $\Delta_j$ und zweiter Ordnung $\nabla_j$ sind definiert als :

$$\Delta_j = (M_j - M_{j-1})/(U_j - U_{j-1}) \tag{2}$$

$$\nabla_j = (\Delta_{j+1} - \Delta_j)/(U_{j+1} - U_{j-1}) \tag{3}$$

Im Hinblick auf eine beschleunigte Durchführung der Interpolation werden die beiden in einem Segment benötigten Differenzen-Quotienten (2) und (3) auf einen gemeinsamen Exponenten $E_j$ skaliert :

$$\Delta_j = A_j \cdot 2^{E_j} \quad \nabla_j = B_j \cdot 2^{E_j} \tag{4}$$

Damit geht Formel (1) über in :

$$M = g(U) = M_{j-1} + (U - U_{j-1}) [A_j + (U - U_j) B_j] \cdot 2^{E_j} \tag{5}$$

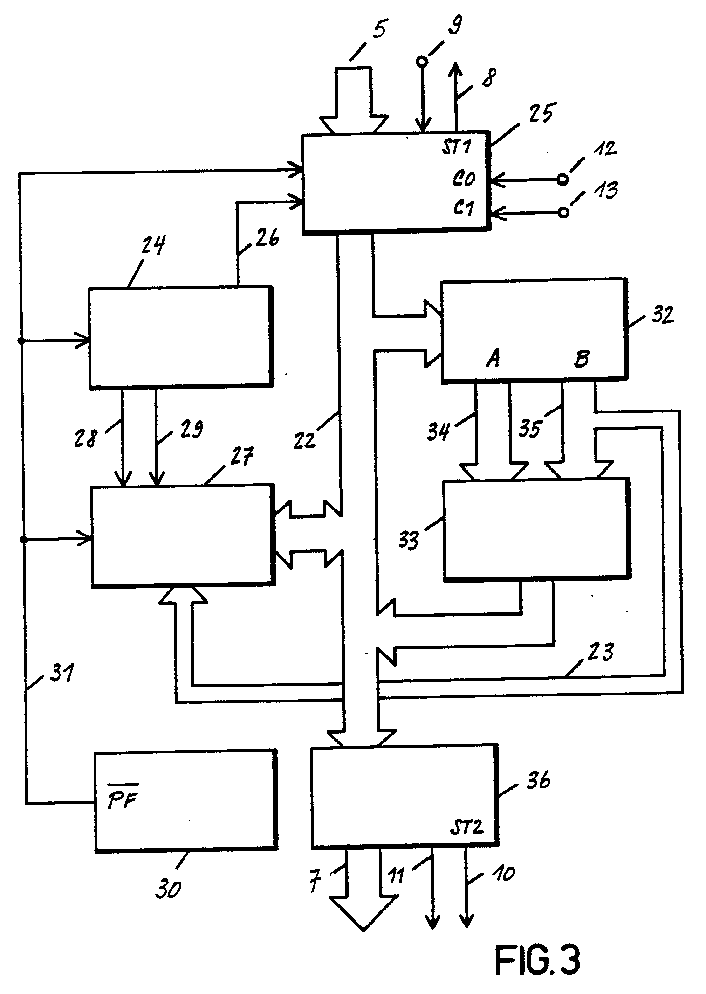

In Fig. 3 ist eine Ausführungsform der Vorrichtung 6 dargestellt. Sie basiert auf einem 16-Bit Daten-Bus 22 und einem 8-Bit Adress-Bus 23.

Das Steuerwerk 24 bewirkt den geordneten schrittweisen Ablauf der durch die Vorrichtung durchgeführten Operationen. Gemäss eines später beschriebenen Steuer-Algorithmus erzeugt es Steuer-Signale zur Steuerung der Vorrichtung, und reagiert auf ihm (über in Fig. 3 nicht dargestellten Leitungen) übermittelte Status-Informationen. Diese umfassen Angaben über den internen Zustand des Rechenwerks 33 und der Eingabe-Logik 25. Die Eingabe-Logik 25 startet mittels des Strobe-Signals 8 den Analog/Digital-Wandler 4 und speichert den auf den Datenleitungen 5 angebotenen digitalen Wert U der Mess-Spannung, welchen sie auf die Aktivierung eines im Steuerwerk 24 erzeugten Steuer-Signals 26 hin auf den Daten-Bus 22 abgibt. Im Daten-Speicher 27 ist die Skalen-Transformation in digitaler Form als Funktions-Tabelle niedergelegt. Er ist mit seinem kombinierten Daten-Eingang/Ausgang am Daten-Bus 22 und seinem Adress-Eingang am Adress-Bus 23 angeschlossen. Mittels zweier im Steuerwerk 24 erzeugter Steuer-Signale 28 und 29 können Daten in den Daten-Speicher 27 eingegeben und aus dem Daten-Speicher 27 ausgegeben werden.

Die Netzausfall-Logik 30 überwacht die Netzversorgung und aktiviert bei einem Netzausfall das mit $\overline{PF}$ bezeichnete Reset-Signal 31. Dieses löst einen asynchronen System-Reset aus, welcher das Steuerwerk 24 in einen definierten Anfangszustand setzt, sowie in der Eingabe-Logik 25 und im Daten-Speicher 27 die Steuer-Signale 26, 28 und 29 sperrt. Damit werden die im Daten-Speicher 27 niedergelegte Funktions-Tabelle geschützt und der Eingabe-Logik 25 und dem Daten-Speicher 27 der Zugriff zum Daten-Bus 22 verwehrt.

Der Zwischen-Speicher 22 enthält Operanden für das Rechenwerk 33 sowie Adressen für den Daten-Speicher 27. Daten werden einzeln vom Daten-Bus 22 eingelesen und paarweise über die mit A und B bezeichneten Datenleitungen 34 und 35 als Operanden dem Rechenwerk 33 angeboten. Daten auf den Datenleitungen 35 werden gleichzeitig als Adressen auf den Adress-Bus 23 gebracht.

Das Rechenwerk 33 wendet arithmetische Operationen auf die ihm paarweise vom Zwischen-Speicher 32 vermittelten Operanden an. Das Resultat einer arithmetischen Operation wird via Daten-Bus 22 im Zwischen-Speicher 32 abgelegt.

Die Ausgabe-Logik 36 ist mit ihrem Eingang am Daten-Bus 22 angeschlossen und dient zur Speicherung des interpolierten digitalen Funktionswertes g(U). Mittels des Strobe-Signals 20 zeigt sie an, wann eine Interpolation abgeschlossen ist. Das Eich-Signal 11 gibt an, ob die zur Interpolation verwendeten Stützwerte geeicht waren oder nicht.

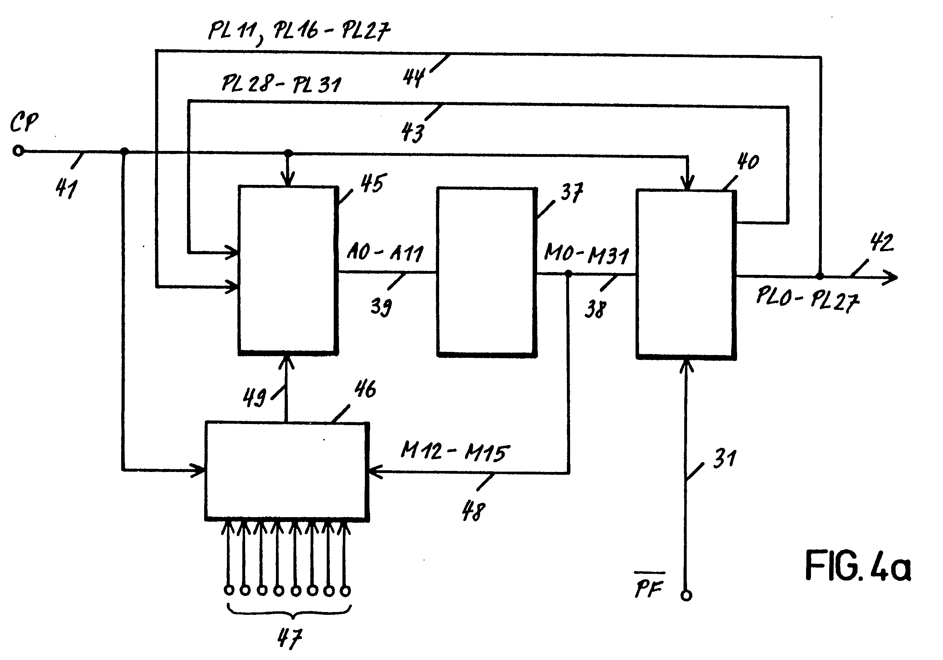

In Fig. 4a ist eine Ausführungsform des Steuerwerkes dargestellt, ausgebildet als mikroprogrammierte Ablaufsteuerung. Ein Steuer-Speicher 37 enthält einen später beschriebenen Steuer-Algorithmus in Form einer zu einem Mikroprogramm zusammengefassten geordneten Folge von Mikro-Instruktionen. Er ist auf einer Anzahl programmierbarer Festwert-Speicher (PROM) aufgebaut, welche derart angeordnet sind, dass sie bis zu 4k 32-Bit-Mikro-Instruktionen speichern können. Eine Mikro-Instruktion wird aus dem Steuer-Speicher 37 auf die mit M0-M31 bezeichneten Datenleitungen 38 geholt, indem diesem auf den mit A0-A11 bezeichneten Adressleitungen 39 die passende 12-Bit Adresse angeboten wird.

Ein 32-Bit Pipeline-Register 40 ist mit seinem Eingang an die Datenleitungen 38, sowie an den mit CP bezeichneten System-Takt 41 angeschlossen. Es dient dazu, während der Dauer eines Takt-Zyklus eine aus dem Steuer-Speicher 37 geholte Mikro-Instruktion zu speichern, um daraus insgesamt 32 zur Steuerung der Vorrichtung benötigte Steuer-Signale 42 und 43 zu erzeugen. Es umfasst vier integrierte Schaltungen des Typs 74LS273 (Oktal D-Type Flip-Flop) von Texas-Instruments, deren asynchrone Clear-Eingänge das Reset-Signal 31 empfangen. Damit können bei einem Netzausfall insbesondere die mit PL28-PL31 bezeichneten Steuer-Signale 43 asynchron tief gesetzt werden, um auf eine später beschriebene Weise im Steuerwerk einen System-Reset zu erzwingen.

Die mit PL0-PL27 bezeichneten Steuer-Signale 42 dienen zur Steuerung der in Fig. 3 dargestellten Module Eingabe-Logik 25, Daten-Speicher 27, Zwischen-Speicher 32, Rechenwerk 33 und Ausgabe-Logik 36. Die mit PL11 und PL16-PL27 bezeichneten Steuer-Signale 44 werden gleichzeitig auch zur Steuerung des Sequenzers 45 benutzt.

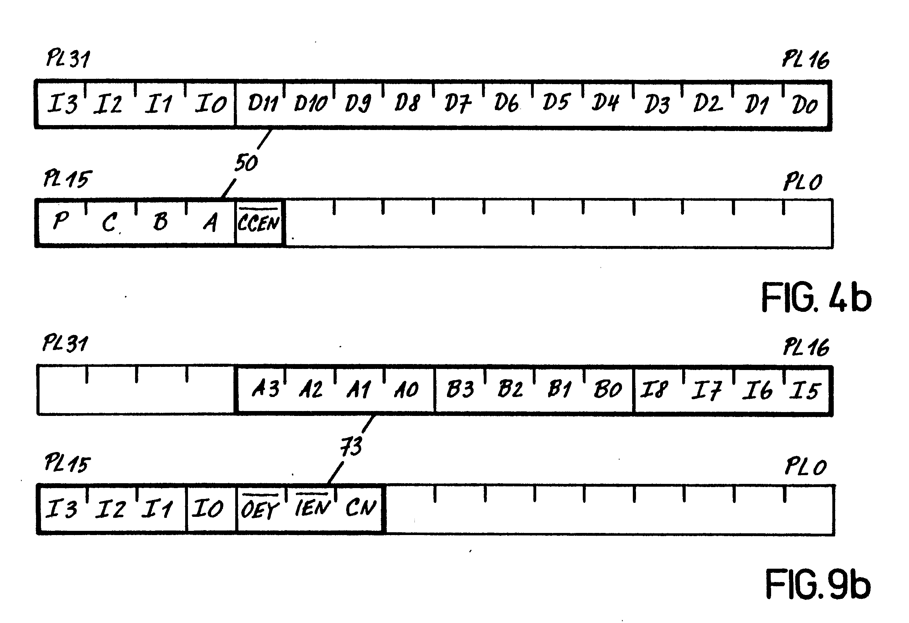

Ein Status-Multiplexer 46 erhält an seinen Daten-Eingängen Status-Informationen in Form von acht Status-Bits 47, welche über den internen Zustand (Status) des Rechenwerkes 33 und der Eingabe-Logik 25 Aufschluss geben. Er besteht aus der von Advanced Micro Devices hergestellten integrierten Schaltung des Typs AM2922, welche ein internes 4-Bit Register enthält. Dieses dient in der dargestellten Ausführungsform als Pipeline-Register und ist mit seinen Select- und Polaritäts-Eingängen an die mit M12-M15 bezeichneten Ausgänge 48 des Steuer-Speichers 37, sowie an den System-Takt 41 angeschlossen. Die damit im Status-Multiplexer 46 intern erzeugten und in Fig. 4a nicht dargestellten Steuer-Signale A, B, C und P wählen unter den Status-Bits 47 eines aus und setzen dessen Polarität fest. Das ausgewählte Status-Bit wird dem Sequenzer 45 als Test-Signal 49 zur Verfügung gestellt. Ein Sequenzer 45 bildet Folgen von 12-Bit Adressen, um damit Folgen von Mikro-Instruktionen aus dem Steuer-Speicher 37 zu holen. Er besteht aus dem Mikroprogramm-Controller des Typs AM2910 von Advanced Micro Devices. Er erhält an seinen Eingängen den System-Takt 41, die mit PL11 ($\overline{CCEN}$), PL16-PL27 (D0-D11) und PL28-PL31 (10-13) bezeichneten Steuer-Signale 44 und 43 sowie das vom Status-Multiplexer 46 erzeugte Test-Signal 49 zugeführt. Das Pipeline-Register 40 speichert während der Dauer eines Takt-Zyklus die momentane Mikro-Instruktion und vermittelt dem Steuerwerk das in Fig. 4b dargestellte Feld 50. Während desselben Takt-Zyklus bildet der Sequenzer 45 die nächste Adresse, bringt diese auf die Adressleitungen 39 und holt damit die nächste Mikro-Instruktion auf die Datenleitungen 38. Weitere Einzelheiten über die Funktionsweise der integrierten Schaltung AM2910 sind im von Advanced Micro Devices herausgegebenen « AM2900 Family Data Book » zu finden.

Die Takt-Rate des System-Taktes 41 beträgt 4 Megahertz, d. h. der Sequenzer 45 und das Pipeline-Register 40 erhalten alle 250 Nanosekunden einen Takt-Impuls. Auf diese Weise werden die Mikro-Instruktionen eines Mikroprogramms in rascher Folge aus dem Steuer-Speicher 37 geholt und im Pipeline-Register 40 in Steuer-Signale 42 und 43 umgesetzt.

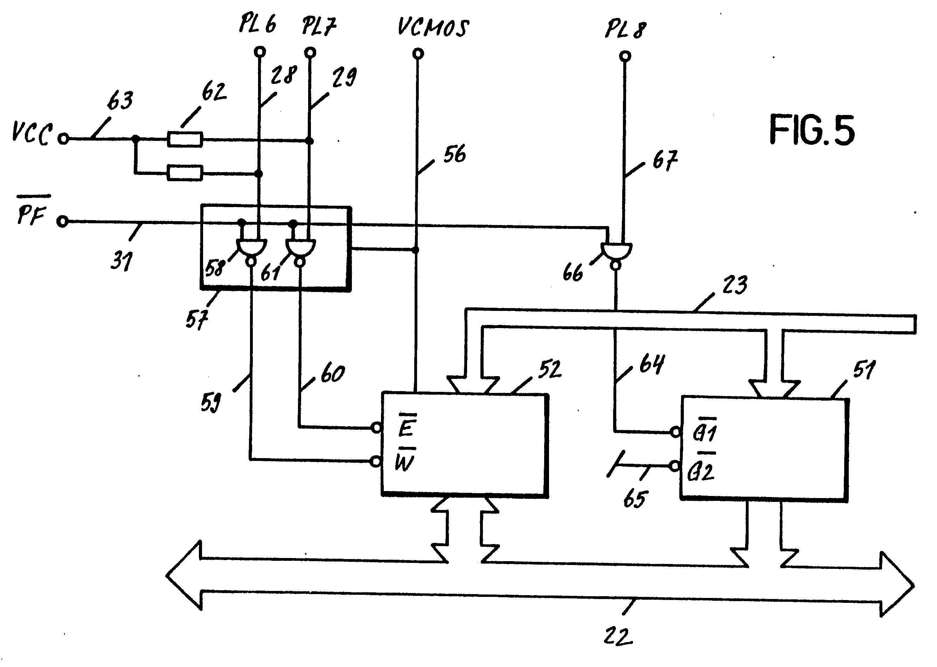

In Fig. 5 ist eine Ausführungsform des Daten-Speichers dargestellt. Er setzt sich zusammen aus einem Lese-Speicher 51 und einem Schreib/Lese-Speicher 52.

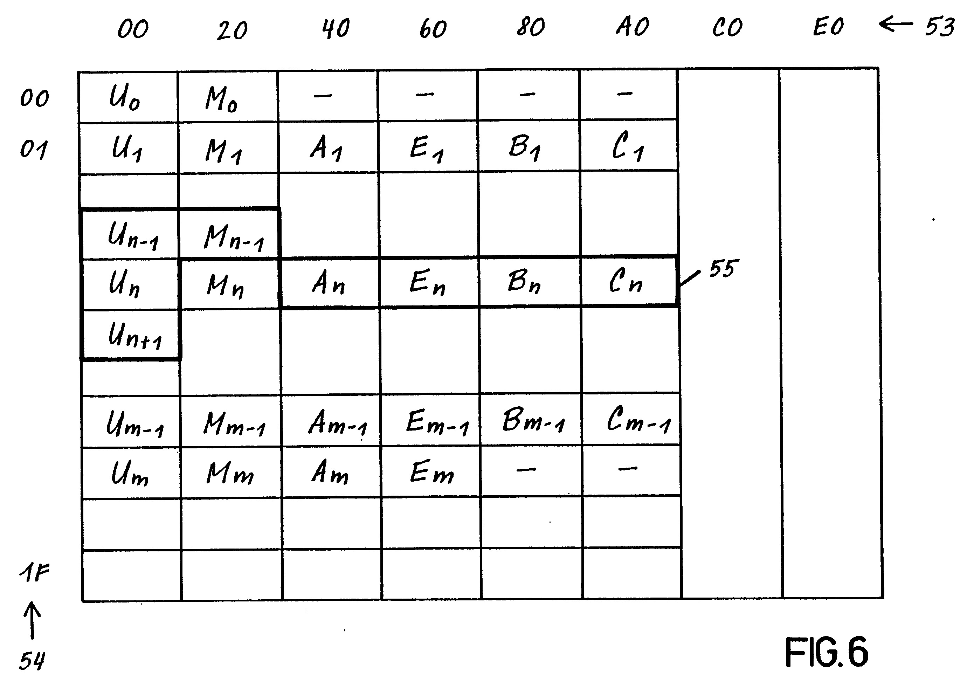

Der Schreib/Lese-Speicher 52 weist eine Kapazität von 256 × 16 Bit auf und enthält in digitaler Form die Funktions-Tabelle der Skalen-Transformation M = g(U). Darin sind die Koordinaten $(U_k, M_k)$ von insgesamt m + 1 Stützwerten zusammen mit der Gesamtheit der zur Interpolation zweiten Grades nach Newton benötigten Differenzen-Quotienten $\Delta_k$ und $\nabla_k$ niedergelegt. Jedem Stützwert $(U_k, M_k)$ ist ein Eich-Bit $c_k$ zugeordnet, welches anzeigt, ob der betreffende Stützwert geeicht ist oder nicht. Drei derartige Eich-Bits sind zu Eich-Indikatoren $C_k = (c_{k-1}, c_k, c_{k+1})$ zusammengefasst, welche ebenfalls in der Funktions-Tabelle gespeichert werden und welche angeben, ob die zur Berechnung von $\nabla_k$ gemäss Formel (3) verwendeten Koordinaten von geeichten Stützwerten stammen. Der Speicher 52 ist auf die in Fig. 6 angegebene Weise in acht 32 × 16-Bit Blöcke unterteilt. Jedem derartigen Block ist eine hexadezimale Basis-Adresse 53 zugeordnet. Tabelle 1 gibt über die in den verschiedenen Blöcken gespeicherten Daten Aufschluss.

Tabelle 1

| Basis-Adresse | |
|---|---|
| 00 | Koordinate $U_k$ der Stützwerte |
| 20 | Koordinate $M_k$ der Stützwerte |
| 40 | Mantisse $A_k$ der Differenzen-Quotienten $\Delta_k$ |

Tabelle 1 (Fortsetzung)

| Basis-Adresse | |
|---|---|
| 60 | Gemeinsamer Exponent $E_k$ |
| 80 | Mantisse $B_k$ der Differenzen-Quotienten $\nabla_k$ |
| A0 | Eich-Indikator $C_k$ |
| C0 | --- |
| E0 | --- |

Innerhalb eines Blocks werden die Daten mittels der von 00 bis 1F laufenden hexadezimalen Index-Adresse 54 adressiert. Der Zugriff zum Speicher 52 erfolgt demnach über indexierte Adressierung.

In der Funktions-Tabelle sind die zur Interpolation in einem Segment gemäss Formel (5) benötigten Daten zu insgesamt $m-1$ Daten-Vektoren zusammengefasst. In Fig. 6 ist der dem Segment mit Segment-Index $j = n$ zugeordnete Daten-Vektor 55 dargestellt. Der Schreib/Lese-Speicher 52 besteht aus vier CMOS-RAM des Typs HM-6562 von Harris Semiconductor. Diese sind mit ihren Adress-Eingängen am Adress-Bus 23 und ihren kombinierten Daten-Eingängen/Ausgängen am Daten-Bus 22 angeschlossen. Um die Signalleitungen von Adress- und Daten-Bus CMOS-kompatibel zu gestalten, sind diese auf bekannte Weise über in Fig. 5 nicht dargestellte Pullup-Widerstände mit der System-Versorgungs-Spannung VCC verbunden. Die Zugriffs-Zeit des Speichers 52 beträgt maximal 300 Nanosekunden.

Zum Schutz der Funktions-Tabelle gegen Datenverlust bei einem Netzausfall wird der Speicher 52 durch eine separate, mit einer wiederaufladbaren Ni/Cd-Batterie gepufferten und mit VCMOS bezeichneten Versogungs-Spannung 56 gespiesen (Battery Backup). Zur Erhaltung der Funktions-Tabelle genügt dabei eine reduzierte Spannung 56 von + 2 Volt. Eine Schaltung zur Sicherstellung dieses minimalen Wertes mittels Batterie-Pufferung ist im « Harris Bipolar & CMOS Memory Data Book» zu finden. Weiter muss verhindert werden, dass während eines Netzausfalls willkürliche Daten in zufällig adressierte Speicherzellen eingegeben werden. Zu diesem Zweck unterdrückt eine Interface-Logik 57 mittels des Reset-Signals 31 während eines Netzausfalls jegliche Schreib-Operationen. Dies wird erreicht durch das NAND-Gate 58, welches für ein tiefes Reset-Signal 31 das aktiv tiefe und mit $\bar{W}$ (Write Enable) bezeichnete Signal 59 sperrt, d. h. hoch setzt. Zur Erhöhung der Störsicherheit wird bei einem Netzausfall das aktiv tiefe und mit $\bar{E}$ (Chip Enable) bezeichnete Signal 60 mittels des NAND-Gates 61 ebenfalls hoch gesetzt. Um die Signale 59 und 60 auch während eines Netzausfalls funktionsfähig zu erhalten, wird die Interface-Logik 57 durch die batteriegepufferte Versorgungs-Spannung 56 gespiesen. In der dargestellten Ausführungsform besteht die Interface-Logik 57 zudem aus einer integrierten CMOS-Schaltung des Typs MM74C00 von National Semiconductor, was für die Signale 59 und 60 korrekte CMOS-Pegel garantiert. Die minimale Betriebs-Spannung von MM74C00 beträgt + 3 Volt, was in der Schaltung zur Batterie-Pufferung der Versorgungs-Spannung 56 berücksichtigt werden muss. Die der Interface-Logik 57 zugeführten Signale müssen ihrerseits CMOS-kompatibel sein. Wie später dargestellt wird, erzeugt die Netzausfall-Logik das Reset-Signal 31 auf den korrekten CMOS-Pegeln. Auf den Leitungen 28 und 29 hingegen liegen die im Steuerwerk generierten TTL-Steuer-Signale PL6 und PL7. Diese sind daher über die Pullup-Widerstände 62 an die mit VCC bezeichnete System-Versorgungs-Spannung 63 angeschlossen, um auch hier korrekte CMOS-Pegel zu erzielen.

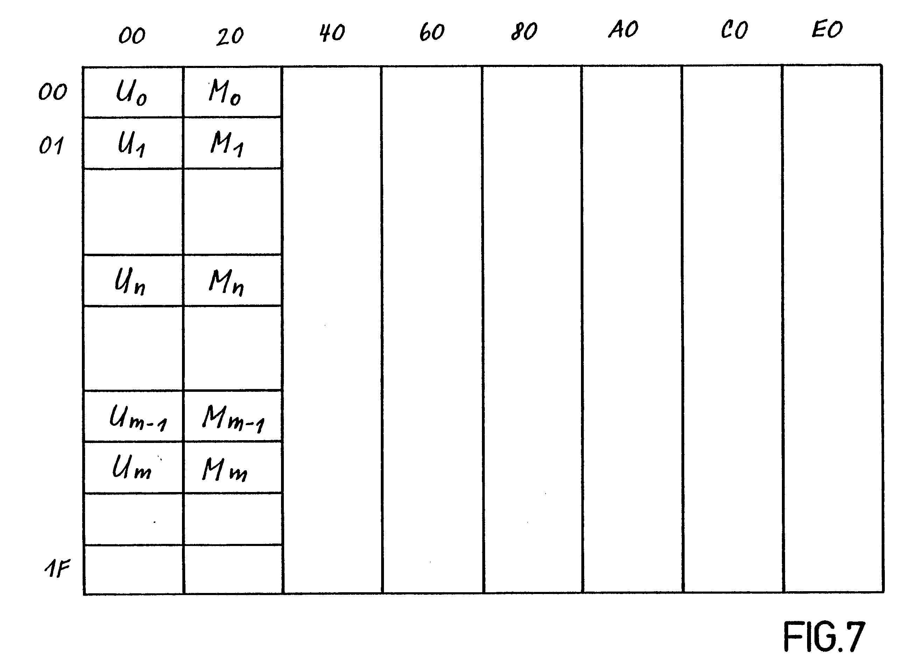

Der Lese-Speicher 51 weist eine Kapazität von $256 \times 16$ Bit auf und enthält die Koordinaten ($U_k$, $M_k$) von insgesamt $m + 1$ Stützwerten der Skalen-Transformation. Bei diesen handelt es sich um ungeeichte Stützwerte, welche einen ungefähren Verlauf der Skalen-Transformation wiedergeben. Der Speicher 51 ist auf die in Fig. 7 dargestellte Weise in acht $32 \times 16$-Bit Blöcke unterteilt. Tabelle 2 gibt über die in den einzelnen Blöcken gespeicherten Daten Aufschluss. Der Block mit der Basis-Adresse A0 enthält lauter hexadezimale Werte 0000.

Tabelle 2

| Basis-Adresse | |
|---|---|
| 00 | Koordinate $U_k$ der Stützwerte |
| 20 | Koordinate $M_k$ der Stützwerte |
| 40 | --- |
| 60 | --- |
| 80 | --- |
| A0 | 0000 |

Tabelle 2  (Fortsetzung)

| Basis-Adresse | |
| --- | --- |
| C0 | --- |
| E0 | --- |

Der Lese-Speicher 51 besteht aus zwei programmierbaren Festwert-Speichern (PROM) des Typs TBP28L22 von Texas Instruments. Diese sind mit ihren Adress-Eingängen am Adress-Bus 23 und ihren 3-State Daten-Ausgängen am Daten-Bus 22 angeschlossen. Das benützte PROM ist mit zwei aktiv tiefen und mit $\overline{G1}$ und $\overline{G2}$ (Output Enable) bezeichneten Steuer-Eingängen 64 und 65 ausgestattet. Der Eingang 65 wird dauernd tief gehalten, während der Eingang 64 mit dem NAND-Gate 66 verbunden ist. Um dem Lese-Speicher 51 bei einem Netzausfall den Zugriff zum Daten-Bus 22 zu verwehren, kann das Signal 64 über das NAND-Gate 66 mittels des Reset-Signals 31 hoch gesetzt werden. Auf der Leitung 67 liegt das Steuer-Signal PL8.

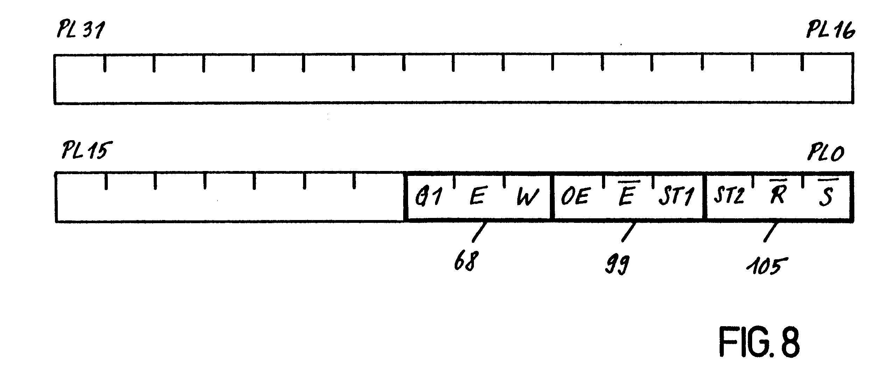

Im Normalbetrieb, d. h. wenn das Reset-Signal 31 inaktiv ist, wird der gesamte Daten-Speicher durch das in Fig. 8 dargestellte Feld 68 gesteuert.

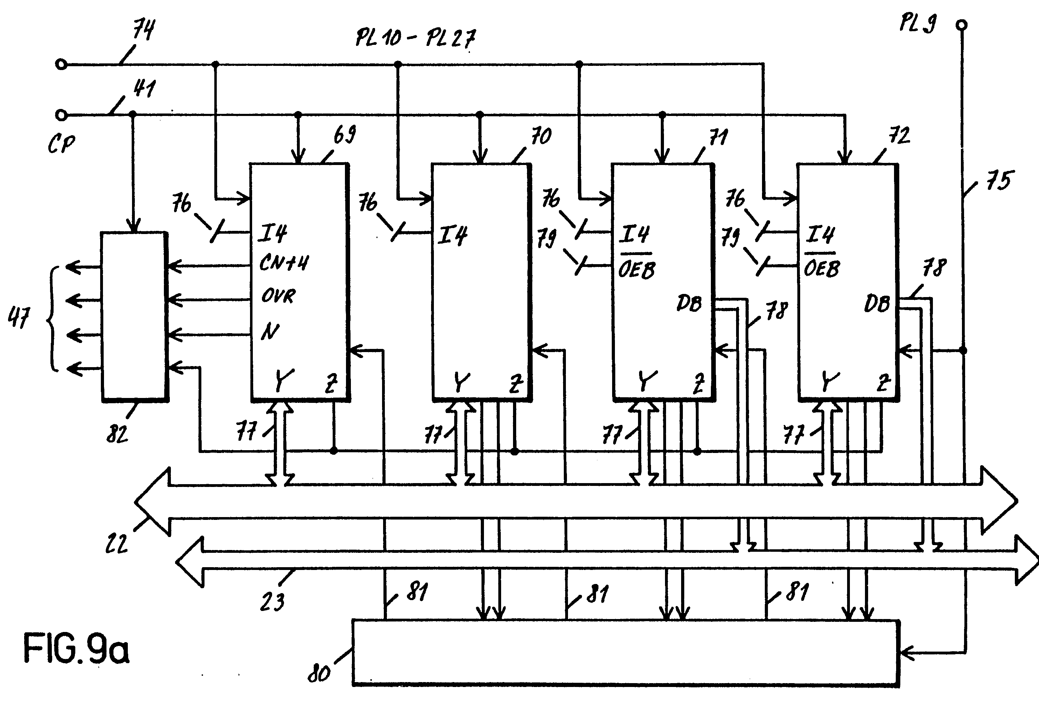

In Fig. 9a ist eine auf Bit-Slice basierende Ausführungsform des Rechenwerks und Zwischen-Speichers dargestellt. Das Rechenwerk wendet arithmetische Operationen auf Operanden aus dem Zwischen-Speicher an. Insbesondere bildet es Adressen zur indexierten Adressierung des Daten-Speichers. Die erwähnten Bit-Slice bestehen aus den von Advanced Micro Devices hergestellten bipolaren 4-Bit Mikroprozessor-Slice des Typs AM2903, wovon deren vier Stück 69-72 zu einem 16-Bit Prozessor zusammengeschaltet sind.

Der Bit-Slice 69 ist der höchstwertige, der Bit-Slice 72 der tiefstwertige Slice.

Das im Mikroprozessor-Slice AM2903 integrierte $16 \times 4$-Bit RAM wird in der dargestellten Ausführungsform dazu benutzt, den Zwischen-Speicher zu bilden. Dieser weist demnach eine Kapazität von $16 \times 16$ Bit sowie eine Zugriffs-Zeit von maximal 50 Nanosekunden auf. Er enthält Operanden für das Rechenwerk sowie Adressen für den Daten-Speicher. Insbesondere sind im Zwischen-Speicher die zur Interpolation in einem Segment benötigten Daten aus der Funktions-Tabelle in Form eines Daten-Vektors niedergelegt.

Fig. 9b zeigt das dem Rechenwerk und Zwischen-Speicher zugeordnete Feld 73. Die mit PL10-PL27 bezeichneten Steuer-Signale 74 werden allen Bit-Slice 60-72 parallel zugeführt, das mit PL9 (Carry In) bezeichnete Steuer-Signal 75 bloss dem tiefstwertigen Bit-Slice 72. Die durch die Gesamtheit dieser Steuer-Signale im Mikroprozessor-Slice AM2903 ausgelösten Operationen sind ausführlich im oben erwähnten Daten-Buch von Advanced Micro Devices dokumentiert. Da der Steuer-Algorithmus der Vorrichtung nur arithmetische Operationen vorsieht, kann der mit 14 bezeichnete Eingang 76 dauernd tief gehalten werden.

Der 4-Bit Port Y eines jeden Bit-Slice 69-72 ist mit je vier Datenleitungen 77 an den Daten-Bus 22 angeschlossen, um Daten-Ausgabe vom Rechenwerk zum Daten-Bus 22 sowie Daten-Eingabe vom Daten-Bus 22 zum Zwischen-Speicher zu ermöglichen (vgl. Fig. 3). Die 4-Bit Ports DB der beiden niederwertigen Bit-Slice 71 und 72 andererseits sind mit je vier Adressleitungen 78 an den Adress-Bus 23 angeschlossen. Da die mit $\overline{OEB}$ bezeichneten Eingänge 79 dauernd tief gehalten werden, sind die Ports DB auf die Daten-Ausgabe beschränkt, und zwar auf die Ausgabe einer Adresse vom Zwischen-Speicher zum Adress-Bus 23 (vgl. Fig. 3).

Zur Steigerung der Durchführungs-Geschwindigkeit der arithmetischen Operationen ist das Rechenwerk mit vorbestimmtem Uebertrag (Carry Lookahead) ausgestattet. Die integrierte Schaltung 80 des Typs AM2902 (Carry Lookahead Generator) von Advanced Micro Devices erzeugt auf bekannte Weise die Signale 81 für den Uebertrag. Das Rechenwerk liefert vier Status-Signale Z, N, OVR und CN + 4, welche einem 4-Bit Status-Register 82 zugeführt werden. Das aus der von Texas Instruments hergestellten integrierten Schaltung des Typs 74LS175 (Quad D-Type Flip-Flop) bestehende Status-Register 82 wird zusammen mit den Bit-Slice 69-72 durch den System-Takt 41 versorgt. Am Ende eines Takt-Zyklus werden die erwähnten Status-Signale in das Status-Register 82 geladen und während des folgenden Takt-Zyklus dem Steuerwerk als Status-Bits 47 angeboten.

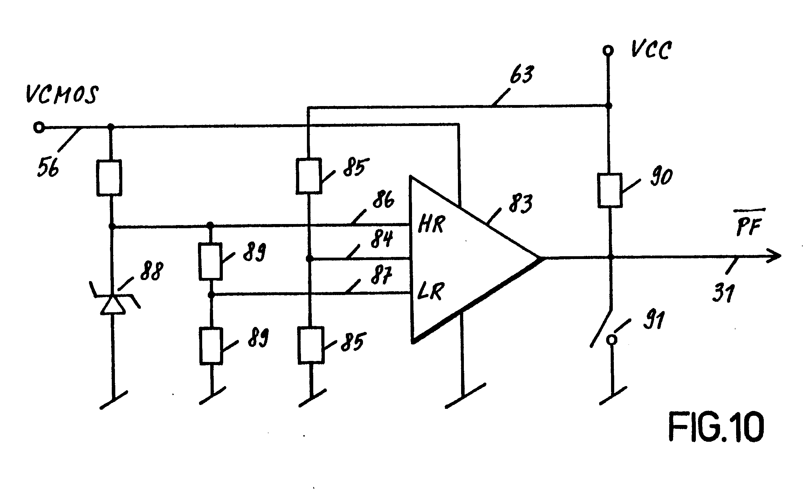

In Fig. 10 ist eine Ausführungsform der Netzausfall-Logik dargestellt. Sie detektiert einen Netzausfall und zeigt diesen mit dem aktiv tiefen und mit $\overline{PF}$ bezeichneten Reset-Signal 31 an. Dadurch wird in der Vorrichtung ein asynchroner System-Reset ausgelöst.

Ein Schmitt-Trigger des Typs CA3098 von RCA dient als Pegel-Detektor 83, welcher an seinem Eingang 84 die mittels eines ersten Spannungsteilers 85 halbierte System-Versorgungs-Spannung 63 überwacht und diese mit den mit HR und LR bezeichneten Referenzen 86 und 87 vergleicht. Die hohe Referenz 86 beträgt 2.4 Volt und wird mit einer Regulator-Diode 88 des Typs LM103-2.4 von National Semiconductor erzeugt. Ein zweiter Spannungsteiler 89 bildet daraus die tiefe Referenz 87, welche 2.375 Volt, d. h. die halbe minimale Betriebs-Spannung integrierter TTL-Schaltungen, beträgt. Um den Pegel-Detektor 83 samt den beiden Referenzen 86 und 87 auch während eines Netzausfalls funktionsfähig zu erhalten, werden diese durch die batteriegepufferte Versorgungs-Spannung 56 gespiesen. Der Schmitt-Trigger 83 weist einen Ausgang mit offenem Kollektor auf, weshalb ein Pullup-Widerstand 90 benötigt wird, welcher an die System-Versorgungs-Spannung 63 angeschlossen ist. Sinkt VCC/2 auf die tiefe Referenz 87 oder darunter, zieht der Pegel-Detektor 83 das Reset-Signal 31 tief. Dieses bleibt im logisch aktiven Zustand, bis VCC/2 wieder die hohe Referenz 86 erreicht oder überschreitet. Der Widerstand 90 ist geeignet dimensioniert, um für das Reset-Signal 31 CMOS-Kompatibilität zu gewährleisten. Mit einer Reset-Taste 91 kann ein System-Reset auch manuell ausgelöst werden.

Sobald die System-Versorgungs-Spannung 63 als Folge eines Netzausfalls unter die minimale TTL-Betriebs-Spannung von 4.75 Volt absinkt, zwingt der Pegel-Detektor 83 das Reset-Signal 31 tief. Erreicht VCC nach einem Netzausfall wiederum 4.75 Volt, ist die gesamte Logik der Vorrichtung 6 erneut voll funktionsfähig. Wegen der Gefahr von Fehlsteuerungen soll jedoch das in der Durchführung unterbrochene Mikroprogramm nicht weiterbearbeitet werden. Aus diesem Grund wird im Steuerwerk dem Pipeline-Register 40 das Reset-Signal 31 zugeführt, welches zum betrachteten Zeitpunkt immer noch aktiv ist. Damit werden insbesondere die mit PL28-PL31 bezeichneten Steuer-Signale 43 tief gesetzt. Diese vermitteln dem Sequenzer 45 die Instruktion JZ (Jump Zero), welche diesen veranlasst, die unter der hexadezimalen Adresse 000 niedergelegte Mikro-Instruktion aus dem Steuer-Speicher 37 zu holen und dem Pipeline-Register 40 anzubieten. Sobald VCC schliesslich 4.8 Volt erreicht, setzt der Pegel-Detektor 83 das Reset-Signal 31 wiederum hoch und gibt damit das Pipeline-Register 40 frei. Mit dem nächsten Impuls des System-Taktes 41 wird die erste Mikro-Instruktion in das Pipeline-Register 40 geladen und das Mikroprogramm ordnungsgemäss bei Adresse 000 gestartet.

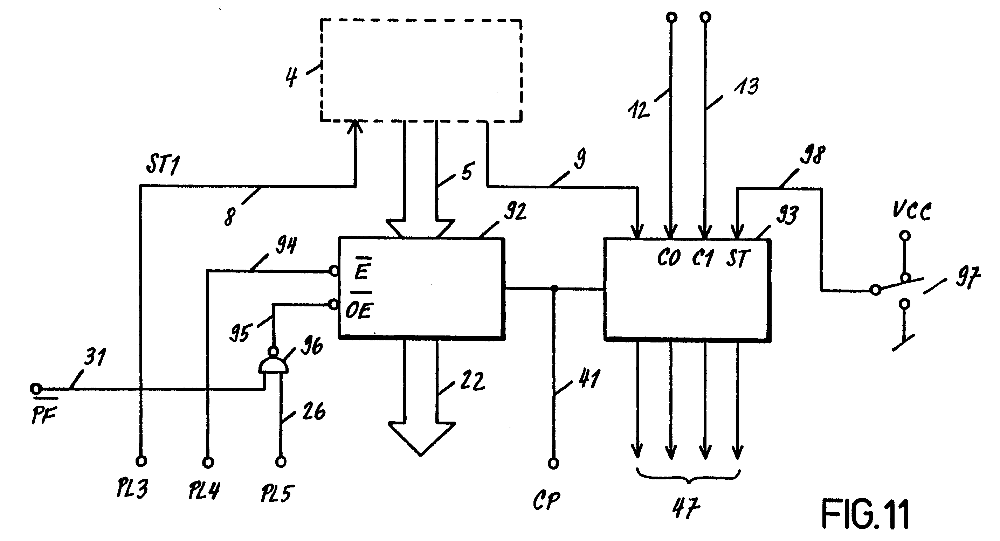

In Fig. 11 ist eine Ausführungsform der Eingabe-Logik dargestellt. Sie besteht aus einem 16-Bit Register 92 und einem 4-Bit Register 93, welche am System-Takt 41 angeschlossen sind. Das Register 92 umfasst zwei integrierte Schaltungen des Typs AM2920 (Oktal D-Type Flip-Flop) von Advanced Micro Devices, das Register 93 eine integrierte Schaltung des Typs 74LS175 (Quad D-Type Flip-Flop) von Texas Instruments.

Der aktiv tiefe Eingang $\overline{E}$ (Clock Enable) des Registers 92 empfängt das mit PL4 bezeichnete Steuer-Signal 94, während der aktiv tiefe Eingang $\overline{OE}$ (Output Enable) über die Leitung 95 mit dem NAND-Gate 96 verbunden ist. Wenn das Steuer-Signal 94 tief ist, wird ein auf den Datenleitungen 5 vorliegender 16-Bit Wert in das Register 92 geladen und, falls das Signal 95 ebenfalls tief ist, über 3-State Ausgänge auf den Daten-Bus 22 gegeben. Um dem Register 92 bei einem Netzausfall den Zugriff zum Daten-Bus 22 zu verwehren, kann das Signal 95 über das NAND-Gate 96 mittels des Reset-Signals 31 hoch gesetzt werden. Auf der Leitung 26 liegt das Steuer-Signal PL5.

Die Eingabe-Logik empfängt das Bereitschafts-Signal 9 sowie die beiden mit C0 und C1 bezeichneten Befehls-Signale 12 und 13. Ein interner Start-Schalter 97, auf dessen Funktion später eingegangen wird, erzeugt das mit ST bezeichnete Start-Signal 98. Das Register 93 hat die Aufgabe, asynchrone Signale auf den System-Takt 41 zu synchronisieren. Zu diesem Zweck werden die vier Signale 9, 12, 13 und 98 am Ende eines Takt-Zyklus in das Register 93 geladen und während des folgenden Takt-Zyklus dem Steuerwerk als Status-Bits 47 zugeführt. Fig. 8 zeigt das zur Steuerung der Eingabe-Logik benötigte Feld 99.

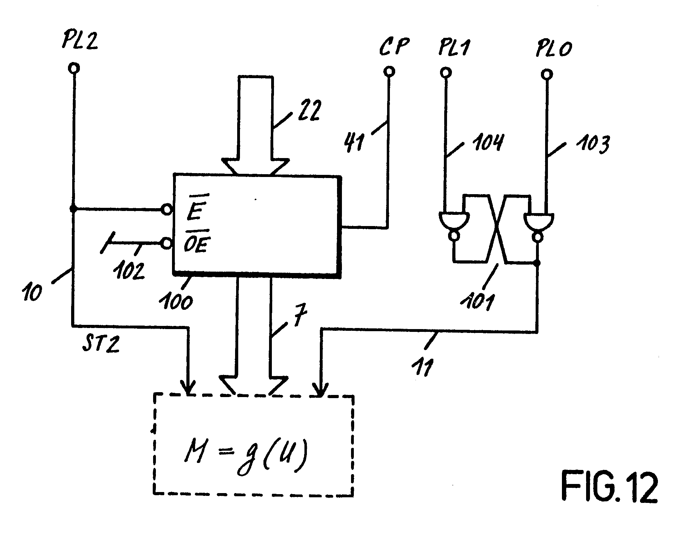

In Fig. 12 ist eine Ausführungsform der Ausgabe-Logik dargestellt. Sie besteht aus einem 16-Bit Register 100 und einem Latch 101. Das Register 100 ist am System-Takt 41 angeschlossen und unfasst zwei integrierte Schaltungen des Typs AM2920 (Oktal D-Type Flip-Flop) von Advanced Micro Devices. Dessen aktiv tiefer Eingang $\overline{E}$ (Clock Enable) empfängt das mit PL2 bezeichnete Steuer-Signal 10, während der aktiv tiefe Eingang $\overline{OE}$ (Output Enable) über die Leitung 102 dauernd tief gehalten wird. Wenn das Steuer-Signal 10 tief ist, wird ein auf dem Daten-Bus 22 vorliegender 16-Bit Wert in das Register 100 geladen. Sobald das Steuer-Signal 10 tief ist, wird ein auf dem Daten-Bus 22 vorliegender 16-Bit Wert in das Register 100 geladen. Sobald das Steuer-Signal 10 hoch geht, zeigt es in Form des Strobe-Signals ST2 an, dass das Register 100 mit einem neuen Wert geladen wurde. Im allgemeinen handelt es sich dabei um einen interpolierten Funktionswert g(U). Das im Latch 101 erzeugte Eich-Signal 11 gibt dabei an, ob die zur Interpolation verwendeten Stützwerte geeicht waren oder nicht. Der logische Zustand des Latch 101 wird durch die mit PL0 und PL1 bezeichneten Steuer-Signale 103 und 104 bestimmt. Fig. 8 zeigt das zur Steuerung der Ausgabe-Logik benötigte Feld 105.

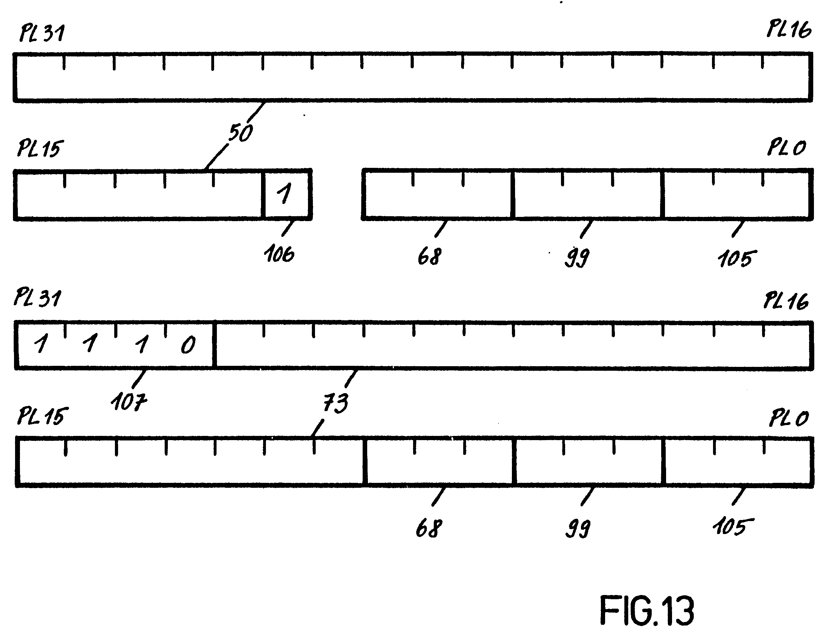

In Fig. 4b, Fig. 8 und Fig. 9b wurde die Aufteilung einer Mikro-Instruktion in die Felder 50, 68, 73, 99 und 105 dargestellt. Dabei überschneidet sich das dem Rechenwerk und Zwischen-Speicher zugeordnete Feld 73 mit dem Feld 50 für das Steuerwerk, d. h. die Steuer-Signale PL11-PL27 dienen zur Steuerung sowohl des Rechenwerks und Zwischen-Speichers als auch des Steuerwerks. In der gewählten Ausführungsform kann deshalb eine Mikro-Instruktion in einem der beiden in Fig. 13 dargestellten Formate vorliegen.

Das erste Format ist dadurch gekennzeichnet, dass sich das dem Rechenwerk zugeführte und mit PL10 ($\overline{IEN}$) bezeichnete Steuer-Signal 106 im logischen Zustand Eins befindet. Dann ignoriert das Rechenwerk die Steuer-Signale PL9 und PL11-PL27, während das Steuerwerk gemäss des Feldes 50 die nächste 12-Bit Adresse bildet. Im zweiten Format andererseits vermitteln die mit PL28-PL31 bezeichneten Steuer-Signale 107 dem Steuerwerk die Instruktion CONT (Continue). Dann ignoriert das Steuerwerk die Steuer-Signale PL11-PL27, während das Rechenwerk gemäss des Feldes 73 unter Zugriff zum Zwischen-Speicher eine arithmetische Operation durchführt.

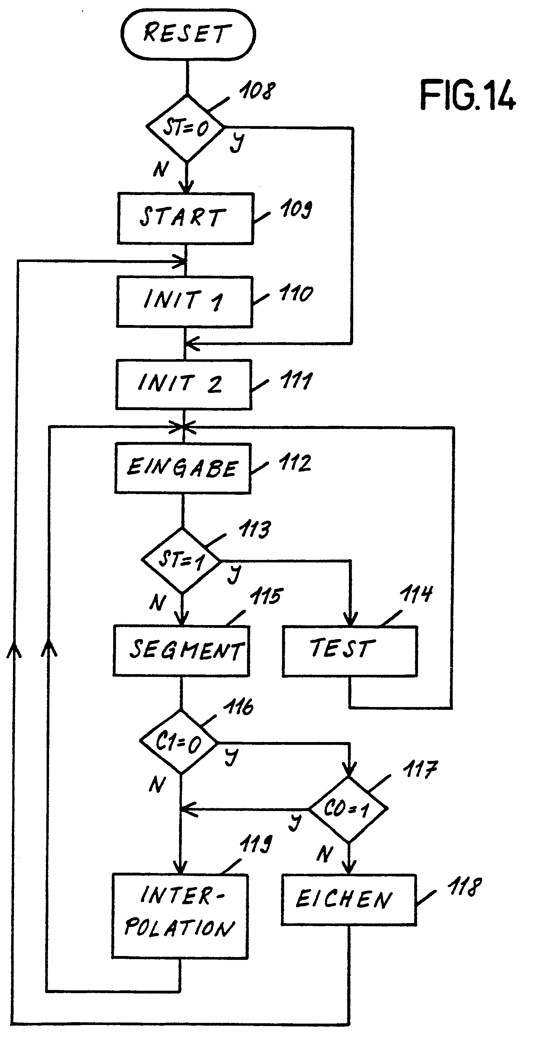

Fig. 14 zeigt die Struktur des im Steuerwerk gespeicherten Mikroprogramms. Dessen Ablauf wird mittels dreier im Register 93 der Eingabe-Logik synchronisierter Signale gesteuert. Es sind dies die mit C0 und C1 bezeichneten Befehls-Signale 12 und 13 sowie das mit ST bezeichnete Start-Signal 98.

Ein als Folge eines Netzausfalls oder manuellen Resets ausgelöster System-Reset startet das Mikroprogramm bei der hexadezimalen Adresse 000. Im Entscheidungs-Block 108 wird das Start-Signal ST geprüft. Befindet es sich im logischen Zustand Eins, wird die Start-Routine 109 durchgeführt. Diese kopiert den gesamten Inhalt des Lese-Speichers 51 in den Schreib/Lese-Speicher 52. Damit enthält der Schreib/Lese-Speicher die Koordinaten von ungeeichten Stützwerten, welche einen ungefähren Verlauf der Skalen-Transformation M = g(U) wiedergeben. Im weiteren startet die Start-Routine 109 mittels des Strobe-Signals 8 im Analog/Digital-Wandler 4 eine Konversion.

Eine erste Initialisierungs-Routine 110 berechnet aus den im Schreib/Lese-Speicher 52 enthaltenen Koordinaten der Stützwerte die Gesamtheit der zur Interpolation zweiten Grades nach Newton benötigten Differenzen-Quotienten und speichert deren skalierte Mantissen $A_k$ und $B_k$ samt gemeinsamen Exponenten $E_k$ im Schreib/Lese-Speicher 52. Damit ist die ungeichte, d. h. auf ungeeichten Stützwerten basierende Funktions-Tabelle gemäss des Schemas von Fig. 6 erstellt. Insbesondere sind die Eich-Indikatoren $C_k$ alle auf Null gesetzt.

Eine zweite Initialisierungs-Routine 111 initialisiert den Zwischen-Speicher 32. Insbesondere wird dieser mit einem Segment-Index j und aus der Funktions-Tabelle mit dem zugehörigen Daten-Vektor geladen, wobei der Segment-Index auf den Anfangswert j = 1 gesetzt wird. Damit enthält der Zwischen-Speicher 32 alle zur Interpolation im ersten Segment benötigten Daten.

Die Eingabe-Routine 112 prüft das im Register 93 der Eingabe-Logik synchronisierte Bereitschafts-Signal 9. Sobald dieses anzeigt, dass im Analog/ Digital-Wandler 4 eine Konversion abgeschlossen ist und auf den Datenleitungen 5 ein digitaler Wert U der Mess-Spannung feststeht, wird dieser mittels der Steuer-Signale 94 und 26 auf den Daten-Bus 22 gebracht und im Zwischen-Speicher 32 abgelegt. Anschliessend startet die Eingabe-Routine 112 erneut den Analog/Digital-Wandler 4 mittels des Strobe-Signals 8.

Im Entscheidungs-Block 113 prüft das Mikroprogramm wiederum das Start-Signal ST. Befindet sich dieses im logischen Zustand Eins, wird die zur Justierung von Gain und Offset des Analog/Digital-Wandlers 4 dienende Test-Routine 114 durchgeführt. Diese bringt den im Zwischen-Speicher 32 abgelegten digitalen Wert U via Daten-Bus 22 mittels des Steuer-Signals 10 in das Register 100 der Ausgabe-Logik. Nach Beendigung der Test-Routine 114 kehrt das Mikroprogramm zur Eingabe-Routine 112 zurück, um die aus Eingabe-Routine 112 und Test-Routine 114 bestehende Programm-Schlaufe wiederholt zu durchlaufen.

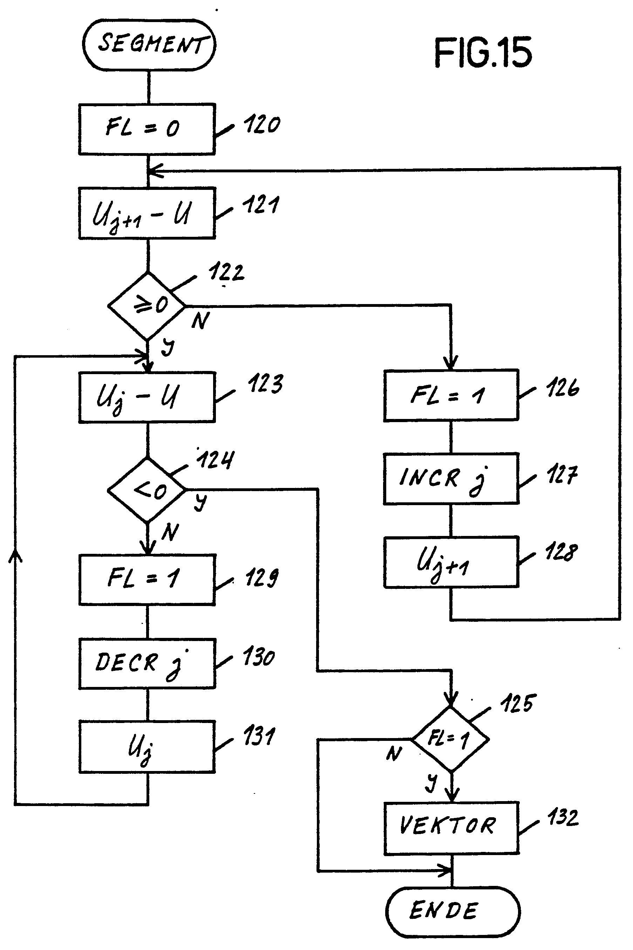

Die Routinen 109 und 114 stellen zur Installation der Vorrichtung dienende Programm-Teile dar, welche nur dann durchlaufen werden, wenn sich das Start-Signal ST im logischen Zustand Eins befindet. Zu Beginn der Installation setzt der Benützer das Start-Signal ST mittels des Start-Schalters 97 der Eingabe-Logik in den logischen Zustand Eins. Zum Abschluss der Installation legt der Benützer den Start-Schalter 97 um und bringt damit das Start-Signal ST in den logischen Zustand Null. In diesem Fall zweigt das Mikroprogramm im Entscheidungs-Block 113 zur Segment-Routine 115 ab, welche in Fig. 15 ausführlich dargestellt ist. Darin wird der Segment-Index überprüft und nötigenfalls neu ermittelt. In den Entscheidungs-Blöcken 116 und 117 prüft das Mikroprogramm die Befehls-Signale C0 und C1, um festzustellen, ob die Interpolations-Routine 119 oder die Eich-Routine 118 durchgeführt werden soll.

Die Eich-Routine 118 nimmt die Eichung eines in der Funktions-Tabelle eingetragenen Stützwertes vor. Dazu ermittelt sie anhand des im Zwischen-Speicher 32 niedergelegten digitalen Wertes U die Index-Adresse 54, unter welcher der zu eichende Stützwert im Schreib/Lese-Speicher 52 abgespeichert ist. Da aus der Segment-Routine 115 der Segment-Index j bekannt ist, kommen für die Index-Adresse 54 nur die Werte j und j + 1 in Frage. Die Eich-Routine 118 untersucht deshalb, ob der digitale Wert U innerhalb einer vorher festgelegten Umgebung um eine der in der Funktions-Tabelle eingetragenen Koordinaten $U_j$ und $U_{j+1}$ liegt. Ist dies beispielsweise für die Koordinate $U_{j+1}$ der Fall, ist für die Index-Adresse 54 der Wert j + 1 ermittelt, und die Eich-Routine 118 eicht den betreffenden Stützwert, indem sie den im Zwischen-Speicher 32 abgelegten digitalen Wert U als neuen Wert der Koordinate $U_{j+1}$ in der Funktions-Tabelle einträgt und die zugehörige Koordinate $M_{j+1}$ beibehält. Anschliessend setzt sie in den Eich-Indikatoren $C_j$, $C_{j+1}$ und $C_{j+1}$ und $C_{j+2}$ das Eich-Bit $C_{j+1}$ auf Eins. Nach Abschluss der Eich-Routine 118 kehrt das Mikroprogramm zu der ersten Initialisierungs-Routine 110 zurück, um die Gesamtheit der Differenzen-Quotienten neu zu berechnen und in der Funktions-Tabelle zu speichern.

Die Interpolations-Routine 119 geht davon aus, dass im Zwischen-Speicher 32 der richtige Segment-Index und der richtige Daten-Vektor vorhanden sind. Sie interpoliert daraus zum ebenfalls im Zwischen-Speicher 32 vorhandenen digitalen Wert U der Mess-Spannung einen digitalen Funktionswert g(U) gemäss der in der Funktions-Tabelle gespeicherten Skalen-Transformation. Der interpolierte digitale Funktionswert wird mittels des Steuer-Signals 10 in das Register 100 der Ausgabe-Logik geladen. Die Interpolations-Routine 119 prüft im weiteren den im Daten-Vektor aufgeführten Eich-Indikator. Ist darin eines der Eich-Bits im Zustand Null, bedeutet dies, dass einer der zur Interpolation verwendeten Stützwerte nicht geeicht ist. In diesem Fall wird das Latch 101 der Ausgabe-Logik mittels des Steuer-Signals PL1 auf Null gesetzt, um das Eich-Signal 11 in den logischen Zustand Null zu bringen als Warnung an den Benützer, dass die Interpolation auf ungeeichten Stützwerten basiert. Befinden sich hingegen alle Bits des Eich-Indikators im Zustand Eins, wird das Latch 101 mittels des Steuer-Signals

PL0 auf Eins gesetzt. Nach Abschluss der Interpolations-Routine 119 kehrt das Mikroprogramm zu der Eingabe-Routine 112 zurück, um einen neuen digitalen Wert U der Mess-Spannung in den Zwischen-Speicher zu holen.

In Fig. 15 ist die Segment-Routine in Form eines Flussdiagramms dargestellt. Sie überprüft den Segment-Index und bestimmt ihn nötigenfalls neu. Der Segment-Index steht auf dem richtigen Wert j, wenn der digitale Wert U, für welchen die Interpolation durchgeführt werden soll, zwischen den Koordinaten $U_j$ und $U_{j+1}$ des im Zwischen-Speicher 32 abgelegten Daten-Vektors liegt, d. h. wenn die Differenz $U_j - U$ negativ und die Differenz $U_{j+1} - U$ positiv ausfällt.

In 120 wird ein Flag auf Null gesetzt. Die Differenz $U_{j+1} - U$ wird in 121 gebildet und in 122 darauf geprüft, ob sie positiv ist. Ist dies der Fall, geht die Segment-Routine weiter zu 123. Dort wird die Differenz $U_j - U$ gebildet und in 124 darauf geprüft, ob sie negativ ist. Wenn dies ebenfalls der Fall ist, stimmt der Segment-Index, und die Segment-Routine verzweigt zu 125.

Stellt sich hingegen in 122 heraus, dass die Differenz negativ ausfällt, ist der Segment-Index zu klein. Die Segment-Routine verzweigt daher zu 126, wo das Flag auf Eins gesetzt wird. In 127 wird der Segment-Index um eins erhöht, und in 128 die neue Koordinate $U_{j+1}$ aus der Funktions-Tabelle in den Zwischen-Speicher 32 geladen. Dann kehrt die Segment-Routine zu 121 zurück, um die neue Differenz $U_{j+1} - U$ zu bilden.

Der Segment-Index ist zu gross, wenn in 124 die Differenz positiv ausfällt. In diesem Fall schreitet die Segment-Routine zu 129, wo das Flag auf Eins gesetzt wird. In 130 wird der Segment-Index um eins erniedrigt, und in 131 die neue Koordinate $U_j$ aus der Funktions-Tabelle in den Zwischen-Speicher 32 geladen. Dann kehrt die Segment-Routine zu 123 zurück, um die neue Differenz $U_j - U$ zu bilden.

Früher oder später ist die Segment-Routine bei 125 angelangt, wo das Flag geprüft wird. Dieses steht auf Eins, wenn der Segment-Index neu ermittelt werden musste. In diesem Fall schreitet die Segment-Routine zu 132, wo der dem neu ermittelten Segment-Index zugeordnete Daten-Vektor aus der Funktions-Tabelle in den Zwischen-Speicher 32 geladen wird. Steht das Flag hingegen auf Null, war der Segment-Index von Anfang an richtig, und es braucht kein neuer Daten-Vektor geladen zu werden.

Während der Interpolation durchläuft das Mikroprogramm wiederholt die aus den Routinen 112, 115 und 119 bestehende Programm-Schlaufe. Die typische Interpolations-Zeit, d. h. die zum einmaligen Durchlaufen der Programm-Schlaufe benötigte Zeit wenn der Segment-Index nicht neu ermittelt werden muss, beträgt 40 Midrosekunden. Muss der Segment-Index um eins geändert werden, erhöht sich die Interpolations-Zeit um 25 Mikrosekunden, da ein neuer Daten-Vektor aus der Funktions-Tabelle geholt werden muss.

In der dargestellten Ausführungsform läuft parallel zur Durchführung einer Interpolation stets eine Analog/Digital-Wandlung ab. In der aus Fig. 1 ersichtlichen Anordnung bereitet der Analog/Digital-Wandler 4 schon den nächsten digitalen Wert der Mess-Spannung 3 auf, während die Vorrichtung 6 noch den momentanen digitalen Wert der Mess-Spannung 3 linearisiert. Die längere der zur Interpolation bzw. Konversion benötigten Zeiten bestimmt die Häufigkeit, mit der die Vorrichtung 6 einen neuen Funktionswert g(U) auf die Datenleitungen 7 ausgeben kann.

**Patentanspruch**

Verfahren zur Eichung eines Massenspektrometers, bei welchem Massenspektrometer

die Massentrennung durch Ablenkung in einem Magnetfeld erfolgt, und dessen Massendurchlauf mittels kontinuierlicher Magnetfeld-Aenderung erreicht wird,

die Massenzahl der im Ionendetektor auftreffenden Ionen fortlaufend aus dem im Trennmagneten herrschenden Magnetfeld bestimmt wird, um eine dem Massendurchlauf folgende Massenskala zu erzeugen,

das im Trennmagneten herrschende Magnetfeld (2) mittels eines zur Magnetfeld-Messung geeigneten Messwertgebers (1) in eine Mess-Spannung U(3) umgesetzt wird, welche zwecks Linearisierung in einen der Massenzahl M direkt proportionalen Wert einer Vorrichtung (6) zugeführt wird, welche darauf fortlaufend eine Skalen-Transformation M = g(U) mittels Interpolation zwischen Peaks eines bekannten Spektrums ausführt,

die Eichung mittels einer Eichsubstanz, d. h. einer Substanz deren Massenspektrum bekannt ist, erfolgt, um Koordinatenpaare $U_k$ und $M_k$ umfassende Stützwerte (14) für die Interpolation festzulegen, dadurch gekennzeichnet,

dass die vom Messwertgeber (1) umgesetzte Mess-Spannung (3) in einem Analog/Digital-Wandler (4) in einen digitalen Wert gewandelt wird, auf welchen die Vorrichtung (6) die Interpolation auf digitale Weise ausführt,

dass für die Interpolation eine festgelegte Anzahl von Stützwerten vorgesehen sind, deren Koordinaten $M_k$ auf Werte (15) der Massenzahlen bekannter Peaks des durch die Eichsubstanz gelieferten Massenspektrums festgelegt sind,

dass in der Vorrichtung (6) im ungeeichten Zustand eine festgelegte Anzahl von Stützwerten (14) in digitaler Form gespeichert sind, deren Werte (16) der Koordinaten $U_k$, zusammen mit den auf Massenzahlen (15) bekannter Peaks festgelegten Koordinaten $M_k$, bloss einen ungefähren Verlauf der auszuführenden Skalen-Transformation wiedergeben,

dass um die Koordinate $U_k$ eines jeden Stützwertes eine Umgebung (18) festgelegt ist,

dass der Benützer das Massenspektrometer eicht, indem er mittels der Eichsubstanz jeden der in der Vorrichtung (6) gespeicherten Stützwerte auf den effektiven Verlauf der auszuführenden Skalen-Transformation eicht,

dass der Benützer den in der Vorrichtung (6) unter der Massenzahl $M_k$ eines bekannten Peaks gespeicherten Stützwert (14) auf den effektiven Verlauf der auszuführenden Skalen-Transformation eicht, indem er das im Trennmagneten herrschende Magnetfeld (2) auf einen solchen Wert einstellt, dass Ionen des die Massenzahl $M_k$ aufweisenden bekannten Peaks im Ionendetektor auftreffen, und indem er in der Vorrichtung (6) die Ausführung eines digitalen Eich-Algorithmus veranlasst,

dass die Vorrichtung (6) im genannten digitalen Eich-Algorithmus selbständig denjenigen Stützwert (14) zur Eichung auswählt, in dessen Umgebung (18) der der Vorrichtung zugeführte auswählt, in dessen Umgebung (18) der der Vorrichtung zugeführte digitale Wert (17) der Mess-Spannung (3) fällt, und selbständig im auf diese Weise ausgewählten Stützwert (14) dessen Wert (16) der Koordinate $U_k$ durch den der Vorrichtung zugeführten digitalen Wert (17) der Mess-Spannung (3) ersetzt, dessen Wert (15) der Koordinate $M_k$ jedoch beibehält.

**Claim**

Method of calibrating a mass spectrometer, in which mass spectrometer

the mass separation is accomplished by deflection in a magnetic field, and the mass scan of which is obtained by a scan of the magnetic field,

the mass number of the ions hitting the ion detector is continuously determined from the magnetic field established in the separation magnet, in order to produce a mass scale tracking the mass scan,

the magnetic field (2) established in the separation magnet is translated into a measurement voltage U (3) by means of a measuring sensor (1) suitable for magnetic field measurement, said measurement voltage, with the aim of linearisation into a value directly proportional to the mass number M, being presented to a device (6) which continuously performs a scale transformation M = g(U) by interpolation between peaks of a known spectrum,

the calibration is accomplished by means of a calibration substance, i. e. a substance the mass spectrum of which is known, in order to set up break points (14) comprising coordinate pairs $U_k$ and $M_k$ for the interpolation,

characterised in

that the measurement voltage (3) translated by the measuring sensor (1) is converted by an analog/digital converter (4) into a digital value on which the device (6) applies the interpolation by digital means,

that a fixed number of break points is provided for the interpolation, the coordinates $M_k$ of said break points being set to values (15) of the mass numbers of known peaks contained in the mass spectrum furnished by the calibration substance,

that in the uncalibrated state a fixed number of break points (14) is stored in digital form in the device (6), the values (16) of the coordinates $U_k$ of said break points, together with the coordinates $M_k$ set to mass numbers (15) of known peaks, providing only an approximate characteristic of the scale transformation to be performed,

that a window (18) is placed around the coordinate $U_k$ of each break point,

that the user calibrates the mass spectrometer by means of the calibration substance by setting up each of the break points stored in the device (6) to the effective characteristic of the scale transformation to be performed,

that the user sets up the break point (14) stored in the device (6) under the mass number $M_k$ of a known peak to the effective characteristic of the scale transformation to be performed by adjusting the magnetic field (2) in the separation magnet to such a value that ions of the known peak having the mass number $M_k$ hit the ion detector, and by initiating the execution of a digital calibration algorithm in the device (6),

and that in said digital calibration algorithm, the device (6) automatically selects for setting up that particular break point (14) into the window (18) of which falls the digital value (17) of the measurement voltage (3) presented to the device, and automatically replaces in the break point (14) thus selected the value (16) of the coordinate $U_k$ by the digital value (17) of the measurement voltage (3) presented to the device, while maintaining the value (15) of the coordinate $M_k$ unchanged.

**Revendication**

Méthode pour calibrer un spectromètre de masse, dans lequel

la séparation de masse a lieu par déflexion dans un champ magnétique, et dont le balayage de masse est obtenu par balayage continu du champ magnétique,

le nombre de masse des ions atteignant le détecteur d'ions est déterminé d'une manière continue à partir du champ magnétique établi dans l'aimant de séparation, afin de générer une échelle de masse qui suit le balayage de masse,

le champ magnétique (2) établi dans l'aimant de séparation est traduit, à l'aide d'un capteur (1) capable de mesurer un champ magnétique, en une tension de mesure U (3), laquelle est présentée, afin d'être linéarisée en une valeur directement proportionnelle au nombre de masse M, à un appareil (6) qui effectue sur la tension de mesure U (3) d'une manière continue une transformation d'échelle M = g(U) par interpolation entre sommets d'un spectre connu,

la calibration a lieu à l'aide d'une substance de calibration, à savoir une substance dont le spectre de masse est connu, afin d'établir pour l'interpolation des échantillons (14) comprenant des paires de coordonnées $U_k$ et $M_k$,

caractérisée en ce que

la tension de mesure (3) traduite par le capteur (1) est convertie dans un convertisseur analogique/numérique (4) en une valeur numérique, sur laquelle l'appareil (6) effectue l'interpolation par voie numérique,

en ce qu'un nombre fixe d'échantillons est prévu pour l'interpolation, à leurs coordonnées $M_k$ étant attribuées les valeurs (15) des nombres de masse associés à des sommets connus provenant du spectre de masse fourni par la substance de calibration,

en ce que, avant la calibration, un nombre fixe d'échantillons (14) est stocké dans l'appareil (6) sous forme numérique, leurs valeurs (16) des coordonnées $U_k$, en combinaison avec les valeurs (15) des nombres de masse associés aux sommets connus et attribués aux coordonnées $M_k$, ne représentant qu'une allure approximative de la transformation d'échelle à effectuer,

en ce qu'une fenêtre (18) est appliquée autour de la coordonnée $U_k$ de chaque échantillon,

en ce que l'utilisateur calibre le spectromètre de masse à l'aide de la substance de calibration en calibrant, selon l'allure effective de la transformation d'échelle à effectuer, chaque échantillon stocké dans l'appareil (6),

en ce que l'utilisateur calibre l'échantillon (14), stocké dans l'appareil (6) sous le nombre de masse $M_k$ associé à un sommet connu, selon l'allure effective de la transformation d'échelle à effectuer en réglant le champ magnétique (2) dans l'aimant de séparation à une telle valeur que des ions du sommet connu associé au nombre de masse $M_k$ atteignent le détecteur d'ions, et en amenant l'appareil (6) à effectuer un algorithme de calibration numérique,

en ce que, dans l'algorithme de calibration numérique mentionné, l'appareil (6) sélectionne pour la calibration d'une manière automatique l'échantillon particulier (14) dans la fenêtre (18) duquel tombe la valeur numérique (17) de la tension de mesure (3) présentée à l'appareil, et remplace ensuite d'une manière automatique dans l'échantillon (14) ainsi sélectionné sa valeur (16) de la coordonnée $U_k$ par la valeur numérique (17) de la tension de mesure (3) présentée à l'appareil, sans modifier sa valeur (15) de la coordonnée $M_k$.

FIG.1

$B$

2

1

$U$

3

4

5   9   8

ST1

6

CO

C1

12

13

ST2

7   11   10

$M = g(U)$

FIG. 2

FIG.3

FIG. 4a

PL 11, PL 16 - PL 27    44

PL 28 - PL 31    43

CP

41

PL 0 - PL 27    42

45    A0 - A11    37    M0 - M31    40

39    38

49    46

M 12 - M 15    48

31

47    PF

0 099 365

PL 31 ... PL 16

| I3 | I2 | I1 | IO | D11 | D10 | D9 | D8 | D7 | D6 | D5 | D4 | D3 | D2 | D1 | DO |

50

PL 15 ... PL 0

| P | C | B | A | $\overline{CCEN}$ | | | | | | | | | | | |

**FIG. 4b**

PL 31 ... PL 16

| | | | | A3 | A2 | A1 | A0 | B3 | B2 | B1 | B0 | I8 | I7 | I6 | I5 |

73

PL 15 ... PL 0

| I3 | I2 | I1 | IO | $\overline{OEY}$ | $\overline{IEN}$ | CN | | | | | | | | | |

**FIG. 9b**

FIG.5

| | 00 | 20 | 40 | 60 | 80 | A0 | C0 | E0 | ← 53 |
|---|---|---|---|---|---|---|---|---|---|
| 00 | $U_0$ | $M_0$ | – | – | – | – | | | |
| 01 | $U_1$ | $M_1$ | $A_1$ | $E_1$ | $B_1$ | $C_1$ | | | |
| | | | | | | | | | |
| | $U_{n-1}$ | $M_{n-1}$ | | | | | | | |
| | $U_n$ | $M_n$ | $A_n$ | $E_n$ | $B_n$ | $C_n$ | | | ⌐ 55 |
| | $U_{n+1}$ | | | | | | | | |
| | | | | | | | | | |
| | $U_{m-1}$ | $M_{m-1}$ | $A_{m-1}$ | $E_{m-1}$ | $B_{m-1}$ | $C_{m-1}$ | | | |
| | $U_m$ | $M_m$ | $A_m$ | $E_m$ | – | – | | | |
| | | | | | | | | | |
| 1F | | | | | | | | | |

↑
54

FIG.6

0 099 365

0 099 365

|      | 00 | 20 | 40 | 60 | 80 | A0 | C0 | E0 |
|------|----|----|----|----|----|----|----|----|
| 00   | $U_0$ | $M_0$ | | | | | | |
| 01   | $U_1$ | $M_1$ | | | | | | |
|      | | | | | | | | |
|      | $U_n$ | $M_n$ | | | | | | |
|      | | | | | | | | |
|      | $U_{m-1}$ | $M_{m-1}$ | | | | | | |
|      | $U_m$ | $M_m$ | | | | | | |
|      | | | | | | | | |
| 1F   | | | | | | | | |

FIG.7

PL 31                                                                 PL 16

| | | | | | | | | | | | | | | |

PL 15                                                                 PL 0

| | | | | | | $Q1$ $E$ $W$ | $OE$ $\overline{E}$ $ST1$ | $ST2$ $\overline{R}$ $\overline{S}$ |

68                99              105

FIG. 8

0 099 365

FIG.9a

FIG.10

FIG.11

FIG.12

PL 31  PL16

50

PL 15  PL 0

1

106  68  99  105

PL 31  PL 16

1  1  1  0

107  73

PL 15  PL 0

68  99  105

FIG.13

0 099 365

**0 099 365**

FIG.14

FIG.15

SEGMENT

FL = 0 — 120

$U_{j+1} - U$ — 121

≥0 — 122

N

y

$U_j - U$ — 123

<0 — 124

y

N

FL = 1 — 129

DECR j — 130

$U_j$ — 131

FL = 1 — 126

INCR j — 127

$U_{j+1}$ — 128

FL=1 — 125

N

y

VEKTOR — 132

ENDE